# EUROPÄISCHE PATENTANMELDUNG

(11) **EP 2 150 039 A1**
(43) Veröffentlichungstag der Anmeldung: **03.02.2010**
(21) Anmeldenummer: 08161290.5
(22) Anmeldetag: 28.07.2008
(51) Int. Cl.: H04N 3/15

(54) **Verfahren zur Bilderfassung von relativ bewegten Objekten**

(71) Anmelder: Basler AG, 22926 Ahrensburg (DE)
(72) Erfinder: Dierks, Friedrich, 22926 Ahrensburg (DE); Kunze, Jörg, 22926 Ahrensburg (DE)
(74) Vertreter: Eisenführ, Speiser & Partner

(57) **Zusammenfassung**

Die Erfindung betrifft ein Verfahren zur Bilderfassung eines in eine Y-Richtung relativ zu einem Bildsensor bewegten Objekts. Erfindungsgemäß wird das Objekt zeilen- oder flächensequentiell erfasst wobei aus der Strahlung in einer ersten Teilbelichtung erzeugte elektrische Ladungen aus jedem Bildsensorelement in zugeordnete strahlungsunempfindliche Schieberegisterelemente transferiert wird, die elektrischen Ladungen aus diesen Schieberegisterelementen in andere, in Y-Richtung beabstandete Schieberegisterelemente transportiert werden, die Strahlung in einer zweiten Teilbelichtung in den Bildsensorelementen einer in Y-Richtung beabstandeten Bildsensorzeile erfasst und in elektrische Ladungen umgewandelt wird, diese elektrischen Ladungen in einem Transferschritt der zugeordnete, strahlungsunempfindliche Schieberegisterelemente transferiert werden, wobei diese elektrische Ladung aus der zweiten Teilbelichtung mit der elektrischen Ladung aus der ersten Teilbelichtung aufsummiert wird. Die zweite Teilbelichtung ist um ein Zeitintervall delta t zu der ersten Teilbelichtung versetzt und das Zeitintervall delta t ist so bemessen, dass das Objekt sich innerhalb dieses Zeitintervalls delta t um eine solche Distanz dy relativ zu dem Bildsensor bewegt hat, dass die erste Objektzeile bei der zweiten Teilbelichtung auf die Bildsensorelemente der zweiten Bildsensorzeile abgebildet wird.

## Beschreibung

Die Erfindung betrifft ein Verfahren zur Bilderfassung eines in eine Y-Richtung relativ zu einem Bildsensor bewegten Objekts.

Es ist grundsätzlich bekannt, Objekte mittels eines Bildsensors in digitaler Form als Bild zu erfassen. Zu diesem Zweck werden beispielsweise sogenannte IL-CCDs (Interline-Charge-Coupled-Devices) als Flächenbildsensor verwendet. Die Bilderfassung erfolgt hierbei typischerweise so, dass mehrere in einer flächigen X-Y-Matrix angeordnete Bildsensorelemente gleichzeitig mit dem von dem Objekt einfallenden Licht belichtet werden und nachfolgend aus jedem dieser Bildsensorelemente die aus dem einfallenden Licht erzeugten elektrischen Ladungen in jeweils jedem Bildsensorelement zugeordnete Schieberegisterelemente verschoben. Die Schieberegisterelemente sind lichtunempfindlich und die Ladungen können aus diesen Schieberegisterelementen nach der Belichtung sequentiell in eine Auswertungseinheit ausgelesen werden, um hierdurch die Bildinformation in Form einzelner, sich in X-Y-Richtung erstreckender Pixelwerte zu erhalten. Auf diese Weise kann mittels eines flächigen Bildsensors eine flächige Erfassung eines Objekts erfolgen, indem zu einem Zeitpunkt gleichzeitig die Belichtung für alle Bildsensorelemente gestartet wird und diese Belichtung zu einem Zeitpunkt gleichzeitig für alle Bildsensorelemente beendet wird, in dem die elektrischen Ladungen aus den Bildsensorelementen in die Schieberegisterelemente verschoben werden.

Das vorgenannte Bilderfassungsprinzip hat in digitalen Kameras für bewegte und unbewegte Bilder Verbreitung gefunden und ist in der Lage, qualitativ hochwertige Bildaufnahmen zu liefern. Problematisch ist diese Art der Bilderfassung stets dann, wenn eine Relativbewegung zwischen dem zu erfassenden Objekt und dem Bildsensor stattfindet. Bei solchen Aufnahmesituationen, die durch eine Bewegung des Bildsensors (beispielsweise der Kamera, wie bei Verwacklung durch freie Handhaltung) oder des Objekts (beispielsweise bei sich bewegenden Fahrzeugen oder Menschen) oder beidem auftreten, kann in der Regel nur durch eine kurze Belichtungszeit ein scharfes und qualitativ zufriedenstellendes Bild erzielt werden. Voraussetzung hierfür ist, dass genügend Licht zur Verfügung steht, um in einer solchen kurzen Belichtungszeit eine ausreichende Lichtmenge auf den Sensor zu bringen.

Das Problem solcher Bewegungs- oder Verwacklungsunschärfe ist bekannt. Gemäß einem bekannten Stand der Technik wird diesem Problem begegnet, indem eine Bewegungskompensation angestrebt wird. Hierzu sind zwei verschiedene Verfahren bekannt, nämlich einerseits die bewegliche Lagerung des Bildsensors und gezielte Nachführung dieses Bildsensors mittels Piezo-Elementen und andererseits die bewegliche Lagerung einer oder mehrerer optischer Elemente des Abbildungsobjektivs und gezielte Nachführung dieser optischen Elemente mittels Aktuatoren. Beide Verfahren benötigen eine Erfassung der Bewegung oder Verwacklung mittels entsprechender Sensorik sowie einen hohen mechanischen Aufwand und vermögen eine solche Unschärfe nur bei Relativbewegungen mit geringer Amplitude und Zeitdauer zu kompensieren.

Weiterhin ist es bekannt, die Bildinformation mehrerer nebeneinanderliegender Bildsensorelemente zusammenzufassen und hierdurch aus einer Addition der Bildinformationen eine erhöhte Lichtstärke (ISO-Zahl) des Bildsensors zu simulieren. Zwar kann hierdurch auch bei schlechten Beleuchtungsverhältnissen mit kürzeren Belichtungszeiten eine ausreichende Belichtung erzielt werden, allerdings reduziert sich die Qualität des Bildes hinsichtlich der Auflösung, da der Bildsensor faktisch durch diese Maßnahme in ein gröberes Raster unterteilt wird.

Es besteht daher ein Bedarf für Bilderfassungssysteme zur qualitativ hochwertigen Bilderfassung von relativ zur Kamera bewegten Objekten auch bei ungünstigen Belichtungsverhältnissen, vorzugsweise in der Aufnahme zweidimensionaler Bilder unter eindimensional relativ zur Kamera bewegten Objekten.

Dieser Aufgabe wird erfindungsgemäß gelöst, indem ein Verfahren der eingangs genannten Art bereitgestellt wird, bei dem das Objekt zeilensequentiell erfasst wird, mit den Schritten
a. Erfassen einer Strahlung einer sich in X-Richtung erstreckenden, ersten Objektzeile in mehreren, in X-Richtung nebeneinander angeordneten, strahlungsempfindlichen Bildsensorelementen einer ersten Bildsensorzeile in einer ersten Teilbelichtung, Umwandeln der in der ersten Teilbelichtung auf die Bildsensorelemente einfallenden Strahlung in elektrische Ladungen,
b. Transferieren der elektrischen Ladung aus jedem Bildsensorelement der ersten Bildsensorzeile in einem Transferschritt der ersten Teilbelichtung in jeweils jedem Bildsensorelement zugeordnete strahlungsunempfindliche Schieberegisterelemente der ersten Bildsensorzeile zu einem ersten Zeitpunkt t₁,
c. Transportieren von jeder elektrischen Ladung in einem Transportschritt der ersten Zeilenerfassung aus dem entsprechenden Schieberegisterelement der ersten Bildsensorzeile in jeweils ein strahlungsunempfindliches Schieberegisterelement einer in Y-Richtung beabstandeten, vorzugsweise benachbart zur ersten Bildsensorzeile liegenden, zweiten Bildsensorzeile, in der jedes strahlungsunempfindliche Schieberegisterelement wiederum einen strahlungsempfindlichen Bildsensorelement zugeordnet ist, wobei die Bildsensorelemente der zweiten Bildsensorzeile in X-Richtung nebeneinander angeordnet sind und jeweils in Y-Richtung benachbart zu den Bildsensorelementen der ersten Bildsensorzeilen liegen,
d. wobei die Y-Richtung vorzugsweise senkrecht zur X-Richtung liegt,
e. Erfassen einer Strahlung der ersten Objektzeile in den Bildsensorelementen der zweiten Bildsensorzeile, Umwandeln der von der ersten Objektzeile auf die Bildsensorelemente einfallenden Strahlung in diesen Bildsensorelementen in elektrische Ladungen,
f. Transferieren der elektrischen Ladung aus der zweiten Teilbelichtung aus jedem Bildsensorelement der zweiten Bildsensorzeile in einem Transferschritt der zweiten Teilbelichtung in die jeweils jedem Bildsensorelement zugeordneten strahlungsunempfindlichen Schieberegisterelemente der zweiten Bildsensorzeile zu einem zweiten Zeitpunkt t₂, wobei diese elektrische Ladung aus der zweiten Teilbelichtung mit der elektrischen Ladung aus der ersten Teilbelichtung aufsummiert wird,
g. wobei der zweite Zeitpunkt t₂ um ein Zeitintervall delta t zu dem ersten Zeitpunkt t₁ versetzt ist, und
h. das Zeitintervall delta t so bemessen ist, dass das Objekt sich innerhalb dieses Zeitintervalls delta t um eine solche Distanz dy relativ zu dem Bildsensor bewegt hat, dass die erste Objektzeile bei der zweiten Teilbelichtung zum Zeitpunkt t₂ auf die Bildsensorelemente der zweiten Bildsensorzeile abgebildet wird,
i. Verschieben der aufaddierten elektrischen Ladungen aus den jeweiligen Schieberegisterelementen der zweiten Sensorzeile in jeweils ein strahlungsunempfindliches Schieberegisterelement einer Auslesezeile, und
j. abschließendes Auslesen der aufaddierten elektrischen Ladungen aus den Schieberegisterelementen der Auslesezeile, um aus den Ladungen eine Bildinformation über die erste Objektzeile zu erhalten.

Das erfindungsgemäße Verfahren wendet sich von dem Prinzip der Nachführung eines Bildsensors oder eines optischen Elements zur Kompensation einer Relativbewegung ab und führt anstelle dessen einen Transfer und Transport der Ladungen in Schieberegisterelementen mit einer zeilensequentiellen Bilderfassung ein. Unter einem Transfer ist hierbei eine Ladungsverschiebung innerhalb einer Bildsensorzeile zu verstehen insbesondere von einem Bildsensorelement in ein diesem zugeordneten Schieberegisterelement. Unter einem Transport ist eine Ladungsverschiebung zwischen zwei Bildsensorzeilen zu verstehen, insbesondere zwischen zwei Schieberegisterelementen. Die Erfindung beruht u.a. auf der Erkenntnis, dass man sich die Relativbewegung zwischen Objekt und Bildsensor zunutze machen kann, um mehrfache Teilbelichtungen ein und derselben Objektzeile durchzuführen. Unter "Licht", "Strahlung" und Wortstammableitungen hiervon ist im Sinne dieser Beschreibung und der Ansprüche eine elektromagnetische Schwingung zu verstehen, die sichtbares Licht umfasst, aber auch andere Wellenlängen einschließt, für welche die Bildsensorelemente ausgelegt sind.

Vorzugsweise können die Ladungen, welche in den jeweiligen Bildsensorelementen aus der einfallenden Strahlung erzeugt werden, zunächst in diesen Bildsensorelementen zwischengespeichert und nachfolgend transferiert werden. Diese Zwischenspeicherung kann entfallen, wenn Umwandlung und Transfer gleichzeitig erfolgen.

Typische Geschwindigkeiten zwischen Bildsensor und Objekt unter Berücksichtigung typischer Abbildungsmaßstäbe erlauben es, das erfindungsgemäße Prinzip des Ladungstransfers und -transports zwischen zwei Teilbelichtungen anzuwenden. Diesem erfindungsgemäßen Prinzip folgend wird die Strahlung einer ersten Objektzeile zunächst in den Bildsensorelementen einer entsprechend ersten Bildsensorzeile erfasst und in diesen Bildsensorelementen in elektrische Ladungen umgewandelt. In den Bildsensorelementen befinden sich zum Beginn der ersten Teilbelichtung keine Ladungen, was durch eine vorhergehende Nullung/Entleerung erreicht wird.

Die so während einer Teilbelichtung einer Objektzeile erzeugten elektrischen Ladungen werden nachfolgend in einem Transferschritt in ein strahlungsunempfindliches Schieberegisterelement verschoben. Hierbei ist zu verstehen, dass jedem einzelnen Bildsensorelement ein einzelnes Schieberegisterelement zugeordnet ist, so dass sich die individuellen elektrischen Ladungen nach diesem Transferschritt in räumlich aufgelöster Form in einer der Anzahl der Bildsensorelemente in der jeweiligen Bildsensorzeile entsprechenden Anzahl von Schieberegisterelementen befinden. Diese Schieberegisterelemente sind folglich der ersten Bildsensorzeile zugeordnet, was sich durch einen entsprechenden elektrischen Ladungsübergang zwischen den entsprechenden Bildsensorelementen und Schieberegisterelementen auszeichnet, in der Regel auch durch eine entsprechende räumliche Zuordnung. So können bei Bildsensoren, welche für die Erfindung geeignet sind, jeweils Bildsensorelemente und Schieberegisterelemente alternierend in einer Zeile angeordnet sein, so dass sich für den gesamten Bildsensor jeweils alternierend Spalten von Bildsensorelementen und Schieberegisterelementen ergeben.

Vor diesem Transfer können sich in den Schieberegisterelementen der ersten Bildsensorzeile keine elektrischen Ladungen befinden, beispielsweise indem die dort befindlichen elektrischen Ladungen vorher weitertransportiert oder gelöscht wurden, so dass keine Addition elektrischer Ladungen durch diesen Transferschritt stattfindet. Das erfindungsgemäße Prinzip beruht jedoch darauf, die Ladungen aus zumindest zwei Teilbelichtungen ein und derselben Objektzeile zu addieren und diese Addition kann im Zuge des Transferschritts erfolgen, indem Ladungen aus vorhergehenden Teilbelichtungen derselben Objektzeile in den Schieberegisterelementen des Bildsensors liegen, in welche der Transfer stattfindet.

Der Zeitpunkt, zu dem die elektrischen Ladungen aus den Bildsensorelementen in die Schieberegisterelemente transferiert werden, beendet die Belichtungsdauer der Bildsensorelemente und bestimmt somit als Differenz zwischen diesem Zeitpunkt und dem vorhergehenden Zeitpunkt der Nullung der Ladungen in den Bildsensorelementen die Belichtungsdauer einer Teilbelichtung.

Die sich den Schieberegisterelementen nun befindenden elektrischen Ladungen werden in Schieberegisterelemente einer zweiten Bildsensorzeile transportiert.

Wenn bereits im Zuge des Transferschritts eine Addierung von Ladungen aus mehreren Teilbelichtungen erfolgt ist, so befinden sich bei diesem Transport in den Schieberegisterelementen der zweiten Bildsensorzeile typischerweise keine elektrischen Ladungen, beispielsweise indem die dort befindlichen elektrischen Ladungen zum gleichen Zeitpunkt berührungsfrei weitertransportiert wird, so dass keine Addition elektrischer Ladungen durch diesen Transportschritt stattfindet.

Unter einem zeitgleichen oder zum gleichen Zeitpunkt erfolgenden Transfer ist hierbei insbesondere ein durch entsprechend zeitgleiche Pulse bewirkter Transfer zu verstehen, wie hier für den Fall einer gewünschten Addition der transferierten Ladungen zu den Ladungen im Ziel-Element. Unter einem berührungsfreien, zeitgleichen oder zum gleichen Zeitpunkt erfolgenden Transport ist hierbei zu verstehen, dass Ladungen, die sich in benachbarten Elementen befinden können, um eine oder mehrere Elemente verschoben werden, wobei die Ladungen vorzugsweise getrennt bleiben. Ein zeitgleicher oder zum gleichen Zeitpunkt erfolgender Transport oder Transfer kann auch durch eine Gruppe geringfügig phasenversetzter Pulse bewirkt werden, beispielsweise um Ladungen in einem Register in voneinander getrennter Form innerhalb des Registers um ein Element weiterzuschieben, indem dieser Verschiebevorgang in mehrere Teilverschiebungen innerhalb entsprechend mehrfach unterteilter Elemente aufgeteilt wird.

Wenn im Zuge des Transferschritts keine Addition der Ladungen aus mehreren Teilbelichtungen derselben Objektzeile erfolgte, so kann diese Addition bei dem Transportschritt vorgenommen werden.

Erfindungsgemäß wird dieselbe Objektzeile, die zuvor in der ersten Teilbelichtung durch die erste Bildsensorzeile erfasst wurde, nachfolgend zu einem zweiten Zeitpunkt in einer zweiten Teilbelichtung von der zweiten Bildsensorzeile erfasst. Der zweite Zeitpunkt ist um einen bestimmten Betrag delta t von dem ersten Zeitpunkt versetzt und dieses Zeitintervall delta t ist so bemessen, dass unter Berücksichtigung der Relativgeschwindigkeit zwischen Objekt und Bildsensor und dem Abbildungsmaßstab sich das Objekt so weit fortbewegt hat, dass die Objektzeile, die zuvor auf die erste Bildsensorzeile abgebildet wurde, nun auf die zweite Bildsensorzeile abgebildet wird. Auf diese Art und Weise wird die gleiche Objektzeile ein weiteres Mal erfasst und entsprechend in elektrische Ladungen umgewandelt.

Diese elektrischen Ladungen werden wiederum aus den Bildsensorelementen der zweiten Bildsensorzeile in die Schieberegisterelemente der zweiten Bildsensorzeile transferiert. Sofern sich in den Schieberegisterelementen der zweiten Bildsensorzeile bereits die Ladungen befinden, die aus den Bildsensorelementen der ersten Bildsensorzeile über die Schieberegisterelemente der ersten Bildsensorzeile in die Schieberegisterelemente der zweiten Bildsensorzeile verschoben wurden, findet simultan mit dem Transferschritt der zweiten Teilbelichtung eine Addition der Ladungen in den Schieberegisterelementen der zweiten Bildsensorzeile statt. Andernfalls findet der Transport der Ladungen aus der ersten Teilbelichtung erst nach dem Transfer der Ladungen aus der zweiten Teilbelichtung statt und dann erfolgt die Aufaddierung der Ladungen aus erster und zweiter Teilbelichtung simultan mit dem Transportschritt der ersten Teilbelichtung.

Auf diese Art und Weise ermöglicht das erfindungsgemäße Bilderfassungsverfahren eine zweifache Teilbelichtung einer Objektzeile mittels zweier Bildsensorzeilen eines Bildsensors in zeitlich gestaffelter Folge und hierbei eine Aufaddierung der jeweils einzeln erzeugten elektrischen Ladungen und somit auch bei schlechten Belichtungsverhältnissen eine verbesserte Qualität der Abbildung.

Dabei ist grundsätzlich das erfindungsgemäße Verfahren so zu verstehen, dass zum ersten Zeitpunkt auch mehrere Objektzeilen in entsprechend mehreren Bildsensorzeilen erfasst werden können oder sogar alle Bildsensorzeilen belichtet werden können und ein jeweiliger Ladungstransport aus einer Bildsensorzeile in die entsprechend in der zweiten Teilbelichtung belichteten Bildsensorzeilen erfolgt, was in diesem Fall einer Gesamtverschiebung aller Ladungen aus den an der ersten Teilbelichtung teilhabenden Bildsensorzeilen entspricht. Auf diese Weise kann ein Bildsensor mit mehreren Zeilen in vollem Umfang zur gleichzeitigen flächigen Objekterfassung genutzt werden, wobei das Objekt vorzugsweise nur auf einen Teilbereich des Bildsensors abgebildet wird. In diesem Fall liegt keine zeilensequentielle sondern eine flächensequentielle Bilderfassung vor, in der mehrere Objektzeilen zeitgleich erfasst werden und dieser Vorgang ein- oder mehrmals mit jeweils zwischengeschalteten Transfer- und Transportvorgängen wiederholt wird.

Es ist weiterhin zu verstehen, dass nicht notwendigerweise stets in den Transportschritten einer Teilbelichtung in die unmittelbar benachbarte Bildsensorzeile verschoben werden muss. Grundsätzlich können die Ladungen in beiden Richtungen und um eine beliebige Zeilenanzahl verschoben werden. Grundsätzlich maßgeblich ist erfindungsgemäß, dass die Ladungen aus der ersten Teilbelichtung einer Objektzeile in diejenige Bildsensorzeile verschoben werden, in welcher die zweite Teilbelichtung der gleichen Objektzeile erfolgt. Maßgeblich für Richtung und Distanz der Verschiebung ist somit die Richtung und Höhe der Relativgeschwindigkeit unter Berücksichtigung von delta t und der Abbildungsmaßstab. So kann beispielsweise bei sich rasch bewegenden Objekten durch entsprechend zügige Nachführung der Ladungen innerhalb der Schieberegisterelemente eine hohe Abbildungsqualität und Bilderfassungsqualität gesichert werden, indem die Ladungen über mehr als eine Bildsensorzeile zwischen zwei Aufnahmezeitpunkten verschoben werden und bei stillstehenden Objekten kann auch auf eine Verschiebung der Ladungen verzichtet werden und die beiden Teilbelichtungen in ein und derselben Bildsensorzeile erfolgen.

Grundsätzlich kann ein Bildsensor, der zur Ausführung des erfindungsgemäßen zeilenförmigen Bilderfassungsverfahrens geeignet ist, in einer Vielzahl von Bauweisen ausgeführt sein. Insbesondere eignet sich aber eine Bauweise, in der sich die Bildsensorzeilen in einer X-Richtung erstrecken und in jeder Bildsensorzeile alternierende Bildsensorelemente und jeweils diesen zugeordnete Schieberegisterelemente angeordnet sind. Auf diese Art und Weise ergeben sich in einem solchen Bildsensor Spalten von Bildsensorelementen und Spalten von Schieberegisterelementen, die alternierend angeordnet sind. Als letzte Zeile eines Bildsensors ist vorzugsweise eine Auslesezeile vorhanden, die ausschließlich aus Schieberegisterelementen besteht, in welche die Ladungen aus den Schieberegisterelementen der letzten Bildsensorzeile verschoben werden können und dann sequentiell in X-Richtung aus dieser Auslesezeile ausgelesen werden können. Es ist aber zu verstehen, dass jegliche andere Arten von Anordnungen der Bildsensorelemente und Schieberegisterelemente zueinander möglich sind, sofern die erfindungsgemäßen Verfahrensschritte mit einem solchen Bildsensor ausgeführt werden können. Insbesondere ermöglicht das erfindungsgemäße Verfahren, eine zeilenförmige Bilderfassung unter Verwendung eines standardisierten IL-CCD-Bildsensors durchzuführen, indem dieser IL-CCD-Bildsensor in entsprechender erfindungsgemäßer Weise angesteuert wird, um die Bilderfassungen und Ladungsverschiebungen sowie -additionen in der erfindungsgemäßen Weise auszuführen.

Neben der Verbesserung der Bildqualität von Bildern, bei denen eine unerwünschte Relativbewegung zwischen Bildsensor und abzubildendem Objekt angestrebt wird, eignet sich das erfindungsgemäße Verfahren auch in einer Reihe von Anwendungen im Bereich der industriellen Qualitätsüberwachung, Fertigungssteuerung, gewerblichen Objekterfassung oder dergleichen in denen Objekte zu erfassen sind, die sich relativ zum Bildsensor bewegen, beispielsweise indem die Objekte auf einer Fördervorrichtung relativ zur bilderfassenden Kamera bewegt werden oder beispielsweise für Luftbildaufnahmen oder Satellitenaufnahmen. Insbesondere bei den letzteren beiden Anwendungen muss in der Regel mit den natürlich vorgegebenen Beleuchtungsverhältnissen belichtet werden und das erfindungsgemäße Verfahren kann eine wesentliche Qualitätssteigerung erzielen. Jedoch ist auch in industriellen Anwendungen der Qualitätsüberwachung oder -steuerung eine künstliche, verstärkte Beleuchtung häufig unerwünscht, beispielsweise bei lichtempfindlichen Objekten und das erfindungsgemäße Verfahren daher besonders geeignet.

Für diese Art der Bilderfassung von relativ bewegten Objekten hat sich in solchen Anwendungen bislang eine zeilensequentielle Bilderfassung in anderer Verfahrensform bewährt. Bei einer vorbekannten zeilensequentiellen Bilderfassung wird zu einem ersten Zeitpunkt eine Zeile des Objekts erfasst, indem die von dieser Zeile ausgehende Strahlung auf eine Bildsensorzeile abgebildet wird und dort in entsprechenden Bildsensorelementen elektrische Ladungen erzeugt. Diese elektrischen Ladungen können nachfolgend aus den Bildsensorelementen ausgelesen werden, wodurch Bildinformationen über diese Objektzeile erhalten werden. Zu einem zweiten, nachgelagerten Zeitpunkt hat sich das Objekt relativ zu dem Bildsensor bewegt, so dass eine andere Objektzeile in den Bereich kommt, der auf dieselbe Bildsensorzeile abgebildet wird. Zu diesem zweiten Zeitpunkt wird erneut eine zeilenförmige Bilderfassung gestartet und die entsprechenden elektrischen Ladungen aus den Bildsensorelementen ausgelesen. Auf diese Art und Weise kann unter Ausnutzung der Relativbewegung zwischen Objekt und Bildsensor eine vollständige Bilderfassung des Objekts mittels nur einer einzigen Bildsensorzeile erreicht werden. Im Sinne dieser Beschreibung und der Ansprüche wird eine Objekterfassung, bei der Objektzeilen in zeitlich versetzter Weise und Ausnutzung einer Relativbewegung zwischen Objekt und Bildsensor erfasst werden, als zeilensequentielle Objekterfassung verstanden werden soll.

Für eine solche zeilensequentielle Bilderfassung von Objekten werden auch spezifische Bildsensoren, sogenannte TDI-Bildsensoren (Time Delayed Integration) verwendet. TDI-Bildsensoren sind Zeilensensoren, welche eine Vielzahl von Bildsensorelementen in Zeilenrichtung (X) aufweisen und eine bestimmte, typischerweise deutlich geringere Anzahl paralleler solcher Bildsensorzeilen in Y-Richtung aufweisen. Die Zeilenanzahl von TDI-Bildsensoren liegt typischerweise im Bereich von 2 bis etwa 150.

Solche TDI-Bildsensoren sind spezifisch für die zeilensequentielle Erfassung von Objekten ausgebildet und können auch solcherart betrieben werden, dass eine Objektzeile mittels mehrerer Bildsensorzeilen erfasst wird. In diesem Fall wird der TDI-Bildsensor so angesteuert, dass zu einem ersten Zeitpunkt eine Objektzeile mittels einer Bildsensorzeile des TDI-Bildsensors erfasst wird und nachfolgend die elektrischen Ladungen aus den Bildsensorelementen dieser Bildsensorzeile in Bildsensorelemente der nächstliegend benachbarten Bildsensorzeile verschoben werden. Die Bildsensorelemente dieser benachbarten Bildsensorzeile kommen durch die Relativbewegung zwischen Objekt und Bildsensor in den Abbildungsbereich derselben Objektzeile und werden ebenso mit dieser Objektzeile belichtet. Die hierbei erzeugten elektrischen Ladungen addieren sich zu den in die Bildsensorelemente zuvor verschobenen Ladungen aus der zum ersten Zeitpunkt belichteten Bildsensorzeile und werden hierdurch aufaddiert. Dieser Vorgang kann mehrfach wiederholt werden, indem die Ladungen weiter zeilenweise synchron zu der Relativbewegung zwischen Objekt und Bildsensor verschoben werden. TDI-Sensoren weisen keine strahlungsunempfindlichen, von den Bildsensorelementen getrennten Schieberegister auf und können daher keinen Transferschritt ausführen.

Aus DE 10 2006 051 950 B3 ist eine Steuerung für eine solche elektronische Zeilenkamera bekannt, bei der die Objektzeilenerfassung über mehrere Bildsensorzeilen erfolgt und hierdurch eine hohe Bildqualität auch bei schlechten Belichtungsverhältnissen erzielt werden kann.

Aus DE 10 2007 015 320 ist ein Verfahren und eine Vorrichtung bekannt, welche eine automatische Erkennung der relativen Bewegungsrichtung zwischen einer solchen Mehrzeilenkamera und einem Objekt ermöglicht.

Mit den zuvor beschriebenen Verfahren zur zeilenförmigen Erfassung eines Objekts ist es zwar prinzipiell möglich, ein relativ zu einem Bildsensor sich bewegendes Objekt in einer hohen Qualitätsstufe auch unter ungünstigen Bilderfassungsbedingungen zu erfassen. Nachteilig an diesen bekannten Verfahren ist jedoch, dass eine spezifische Abstimmung zwischen dem Aufbau des TDI-Bildsensors und der Ansteuerung in Abhängigkeit der Geschwindigkeit der Relativbewegung zwischen Objekt und Kamera erforderlich ist. Dies hat einerseits zur Folge, dass Bilderfassungssysteme in sehr spezifischer Weise an die jeweiligen Bilderfassungsbedingungen angepasst werden müssen, was aufgrund individuellen Fertigungsaufwands zu hohen Kosten solcher Bilderfassungssysteme führt.

Zudem sind bestehende Bilderfassungssysteme dieser Art aufgrund der festen Anzahl der Sensorzeilen, über welche die Addition erfolgt, in häufig nur sehr aufwendiger Weise an geänderte Bilderfassungsbedingungen anpassbar, was dazu führt, dass bei Änderungen der Bilderfassungsbedingungen eine Neuanschaffung oder aber zumindest eine tiefgreifende Überarbeitung im Hardware- und Softwarebereich solcher Bilderfassungssysteme erforderlich wird, um weiterhin den gleichen Qualitätsstandard an Bildern zu erzielen. Schließlich kann ein Objekterfassungsvorgang mit diesem vorbekannten Verfahren nicht in der gleichen vorteilhaften Weise an die Relativgeschwindigkeit des Objekts und Änderungen dieser Relativgeschwindigkeit oder an im/am Objekt selbst stattfindende Bewegungsvorgänge hinsichtlich Richtung und Größe angepasst werden.

Das erfindungsgemäße Verfahren bietet auch für solche bereits bislang mittels zeilensequentieller Objekterfassung durchgeführten Anwendungen erhebliche Vorteile. So kann mit konventionellen IL-CCD-Bildflächensensoren gearbeitet werden, die zu geringeren Kosten für jeweils individuelle Bilderfassungsbedingungen herstellbar sind und/oder mit geringerem Aufwand an geänderte Bilderfassungsbedingungen anpassbar sind. Zudem kann in bestimmten Anwendungsfällen in einfacher Weise durch die Nutzung der Transportvorgänge in den lichtunempfindlichen Schieberegisterelementen eine Anpassung an Änderungen der Relativgeschwindigkeit umgesetzt werden. Zudem ist die gleichzeitige, flächige Objekterfassung hinsichtlich Bildverzerrungen relativ robust gegen Änderungen der Geschwindigkeit der Relativbewegung.

Gemäß einer ersten bevorzugten Ausführungsform des erfindungsgemäßen Verfahrens ist vorgesehen, dass
a. die Strahlung einer Objektzeile in einer Anzahl von m Teilbelichtungen zu entsprechend um zeitlich um ein konstantes oder variables Zeitintervall delta t beabstandeten, aufeinanderfolgenden Zeitpunkten t₁, t₂, ...tₘ auf jeweils eine einer Vielzahl von m Bildsensorzeilen abgebildet wird, die jeweils in Y-Richtung zueinander beabstandet sind,
b. die in einem jeweiligen Bildsensorelement einer Bildsensorzeile zu einem Zeitpunkt tₐ erzeugte elektrische Ladung mit den Ladungen aus den vorhergehenden Teilbelichtungen zum Zeitpunkt t₁...tₐ₋₁ addiert wird,
c. diese aufaddierte elektrische Ladung jeweils in ein strahlungsunempfindliches Schieberegisterelement derselben Bildsensorzeile transferiert und in eine Schieberegisterelement derjenigen Bildsensorzeile transportiert wird, in welcher die Teilbelichtung der Objektzeile zum nachfolgenden Zeitpunkt tₐ₊₁ erfolgt, wobei a eine ganzzahlige Zahl zwischen 1 und m-1 ist, und
d. das abschließende Auslesen aus den Schieberegistern der Auslesezeile erfolgt, nachdem die gesamten m Teilbelichtungen erfolgt und die hieraus gebildeten Ladungen addiert sind.

Gemäß dieser bevorzugten Ausführungsform wird eine Objektzeile in mehrere Bildsensorzeilen zu entsprechend mehreren Zeitpunkten abgebildet, wobei die jeweils aus dieser Abbildung erzeugten elektrischen Ladungen zu einer Gesamtsumme aufaddiert werden und nachfolgend ausgelesen werden, um Bildinformation über diese Objektzeile zu erhalten. Hierdurch wird auch bei ungünstigen Bilderfassungsbedingungen, wie beispielsweise ungünstiger Beleuchtung, eine hohe Qualität ermöglicht, indem eine Mehrfachbelichtung ein und derselben Objektzeile erfolgt und die einzelnen Bildinformationen aufaddiert werden. Dies führt zu einer Vergrößerung des gesamten erfassten Ladungspaketes und damit einer Erhöhung des Signal zu Rausch-Verhältnisses.

Zu einem bestimmten Zeitpunkt ist durch Aufaddierung eine Vielzahl von Ladungen (zumindest aber von zwei Ladungen) für jedes Abbildungspixel einer Objektzeile eine ausreichende Qualität des erfassten Bildes erreicht und die so aufaddierten Ladungen können zur weiteren Bildverarbeitung ausgelesen werden. Zu diesem Zweck werden die aufaddierten Ladungen entsprechenden Schieberegisterelementen einer Auslesezeile zugeführt, aus der sie beispielsweise sequentiell ausgelesen werden können. Typischerweise erfolgt dieses Verschieben der aufaddierten elektrischen Ladungen in die Schieberegisterelemente der Auslesezeile in laufender Weise während eines Aufnahmevorgangs, indem aus den Schieberegisterelementen der letzten Bildsensorzeile die Ladungen in die Schieberegisterelemente der Auslesezeile verschoben werden und hierauf folgend ausgelesen werden, bevor die nächsten elektrischen Ladungen aus der letzten Bildsensorzeile in die Auslesezeile verschoben werden.

Gemäß einer weiteren bevorzugten Ausführungsform ist vorgesehen, dass
a. mehrere Objektzeilen in einer ersten Teilbelichtung zu einem ersten Zeitpunkt t₁ in Bildsensorelementen jeweils entsprechend mehrerer Bildsensorzeilen erfasst werden,
b. die aus der ersten Teilbelichtung erzeugten elektrischen Ladungen zu einem Zeitpunkt t₁ in einem Transferschritt der ersten Zeilenerfassung in Schieberegisterelemente, die den Bildsensorelementen einer Bildsensorzeile der entsprechend mehreren Bildsensorzeilen zugeordnet sind, transferiert werden,
c. die elektrischen Ladungen aus jedem Schieberegisterelement der Bildsensorzeilen der ersten Teilbelichtung in einem Transportschritt der ersten Teilbelichtung in ein Schieberegisterelement einer jeweils in y-Richtung beabstandeten Bildsensorzeile transportiert wird, und
d. die mehreren Objektzeilen in einer zweiten Teilbelichtung zu einem zweiten Zeitpunkt t₂ in Bildsensorelementen der jeweils in y-Richtung beabstandeten Bildsensorzeilen erfasst werden,
e. wobei der zweite Zeitpunkt t₂ um ein Zeitintervall delta t zu dem ersten Zeitpunkt t₁ versetzt ist, und
f. das Zeitintervall delta t so bemessen ist, dass das Objekt sich innerhalb dieses Zeitintervalls delta t um eine solche Distanz dy relativ zu dem Bildsensor bewegt hat, dass jede Objektzeile der mehreren Objektzeilen bei der zweiten Teilbelichtung zum Zeitpunkt t₂ auf die Bildsensorelemente derjenigen Bildsensorzeile abgebildet wird, in deren Schieberegisterelemente die Ladungen aus der ersten Teilbelichtung dieser Objektzeile transportiert wurden oder werden,
g. die aus der zweiten Teilbelichtung erzeugte elektrische Ladung der zweiten Teilbelichtung der jeweiligen Objektzeile zu einem Zeitpunkt t₂ in einem Transferschritt der zweiten Teilbelichtung in die Schieberegisterelemente, die den Bildsensorelementen der jeweils entsprechend mehreren Bildsensorzeilen der zweiten Teilbelichtung zugeordnet sind, transferiert werden,
h. die zu jeder Objektzeile der mehreren Objektzeilen in der ersten Teilbelichtung erzeugten Ladungen mit den zu dieser Objektzeile in der zweiten Teilbelichtung erzeugten Ladungen aufaddiert werden,
i. gegebenfalls drei bis m weitere Teilbelichtungen der Objektzeilen zu Zeitpunkten t₃...tₘ erfolgen, wobei jeweils ein entsprechender Transfer und Transport der Ladungen aus einer der weiteren Teilbelichtungen und ein Aufaddieren der Ladungen aus einer Teilbelichtung einer Objektzeile zu den Ladungen aus vorhergehenden Teilbelichtungen der entsprechend gleichen Objektzeile erfolgt.

Gemäß dieser bevorzugten Ausführungsform werden zum ersten Abbildungszeitpunkt gleichzeitig mehrere Objektzeilen in entsprechend mehreren Bildsensorzeilen erfasst und dieser Vorgang dann entsprechend einmal oder vorzugsweise mehrfach wiederholt, wobei sich bei zumindest einer, vorzugsweise jeder neuen Objektzeilenteilbelichtung durch die Relativbewegung zwischen Objekt und Bildsensor eine Objektzeilenverschiebung um eine oder mehrere Bildsensorzeilen im Abbildungsmaßstab ergeben hat. Hierdurch trifft eine zuvor von einer Bildsensorzeile erfasste Objektzeile nun auf eine andere Bildsensorzeile und erzeugt in entsprechender Weise dort eine Ladung, die zu der vorhergehenden Ladung addiert werden kann.

Es ist zu verstehen, dass bei dieser Art und Weise der Bilderfassung die Verschiebung der Ladungen in den Schieberegisterelementen solcherart zu erfolgen hat, dass Ladungen, die sich in Schieberegisterelementen befinden, in welche Ladungen verschoben werden sollen, bei diesem Verschiebevorgang selbst verschoben werden, wenn eine Addierung von Ladungen in ungewünschter Weise vermieden werden soll. Dies kann in typischen Ausführungsformen dazu führen, dass die Ladungen gleichzeitig berührungsfrei verschoben werden. Dabei werden insbesondere diejenigen Ladungen aus Schieberegisterelementen verschoben, denen ein Bildsensorelement zugeordnet ist. Es ist zu verstehen, dass Ladungen aus Schieberegisterelementen einer Randzeile entsprechend anders verarbeitet werden können, insbesondere in ein Ausleseregister verschoben werden können.

Grundsätzlich kann mit dieser Fortbildung eine Objektzeilenanzahl von n Zeilen gleichzeitig erfasst werden und m-fach teilbelichtet werden, wobei n die Anzahl der Bildzeilen des Bildsensors entspricht. Dabei werden, sofern zwischen je zwei Teilbelichtungen ein Zeilenvorschub des Objekts von einer Zeile erfolgt, durch Randeffekte n-m+1 Objektzeilen nicht mit der vollständigen Anzahl der Teilbelichtungen abgebildet, also unterbelichtet.

Gemäß einer weiteren bevorzugten Ausführungsform ist vorgesehen, dass
a. eine erste Gruppe von m Objektzeilen mittels einer ersten Gruppe von m Bildsensorzeilen eines Bildsensors zu einem Zeitpunkt tₐ₋₁ erfasst wird,
b. zumindest eine weitere Gruppe von m Objektzeilen mittels einer entsprechend zumindest einen weiteren Gruppe von m Bildsensorzeilen desselben Bildsensors oder eines anderen Bildsensors zu demselben oder einem späteren Zeitpunkt tₐ erfasst wird, wobei a eine ganzzahlige Zahl zwischen 2 und m ist,
c. für jede der zumindest zwei Gruppen von Objektzeilen eine in Zeitintervallen delta t beabstandete, aufeinanderfolgende Erfassung der Objektzeilen mit entsprechendem Transfer und Transport der erzeugten elektrischen Ladungen in Schieberegisterelemente innerhalb der jeweiligen Gruppe der Bildsensoren erfolgt, und
d. in einem die Objekterfassung abschließenden Schritt die elektrischen Ladungen aus den zumindest zwei Gruppen von Bildsensorzeilen des Bildsensors in eine den beiden Gruppen gemeinsame Auslesezeile des Bildsensors oder jeweils jeder Gruppe von Bildsensorzeilen zugeordnete Auslesezeilen verschoben werden und nach jeder Verschiebung von elektrischen Ladungen einer Objektzeile aus einer Gruppe von Bildsensorzeilen diese Ladungen aus der Auslesezeile ausgelesen werden.

Bei dieser bevorzugten Ausführungsform werden mehrere Gruppen von Bildsensorzeilen innerhalb eines Bildsensors oder in mehreren Bildsensoren zur Bilderfassung eingesetzt. Jede dieser Gruppen kann lediglich einen Objektzeilenbereich erfassen, der einen Teil des Gesamtobjekts ausmacht oder die Gruppen können übereinstimmende Objektbereiche erfassen. Idealerweise ergänzen sich hierbei die von den einzelnen Gruppen von Bildsensorzeilen erfassten Objektzeilen zu der Gesamtheit aller Objektzeilen oder es bestehen kleinere oder vollständige Objektzeilenüberschneidungen.

Diese Art und Weise der zeilensequentiellen Objekterfassung kann eine insgesamt schnellere Gesamtabtastung eines Objekts ermöglichen, da das Objekt bei dieser Ausgestaltung des Verfahrens nicht vollständig den Bildsensor passieren muss, um erfasst zu werden, wobei unter vollständigem Passieren zu verstehen ist, dass jede Objektzeile des Objekts auf jede Bildsensorzeile des Bildsensors abgebildet worden ist oder zumindest an jeder Bildsensorzeile des Bildsensors durch die Relativbewegung vorbeigeführt worden ist. Stattdessen kann bei diesem Abbildungsverfahren der Bildsensor in Gruppen von beispielsweise jeweils zehn Bildsensorzeilen unterteilt werden, zugleich der Bildsensor so groß ausgebildet werden, dass das gesamte Objekt zu einem einzigen Zeitpunkt auf den Bildsensor abgebildet werden kann und hierbei darüber hinaus ein Spielraum von zumindest zehn Bildsensorzeilen verbleibt, der nicht vom Objekt abgedeckt wird. In diesem Beispiel kann bei dieser beispielhaften Unterteilung das Objekt in zehn Bilderfassungsschritten mit jeweils zeilenweisem Vorschub erfasst werden, wodurch jede Objektzeile zehnfach erfasst wird und die hierbei erzeugten elektrischen Ladungen aufaddiert werden.

Diese Verfahrensfortbildung ist insbesondere vorteilhaft, da häufig die Anzahl der aufeinanderfolgenden Teilbelichtungen einer Objektzeile begrenzt ist aufgrund von Synchronisationsfehlern (in y-Richtung) oder Winkelfehlern (in x-Richtung), welche zur Folge haben können, dass ein Objektzeilenbereich nach einer bestimmten Anzahl von Teilbelichtungen nicht mehr ausreichend präzise auf das Bildsensorelement abgebildet wird, in dem die nächste Teilbelichtung stattfinden soll. Diese Problematik kann überwunden werden, indem die Anzahl der Teilbelichtungen einer Objektzeilenerfassung begrenzt wird und die Objektzeile mehrfach mit dieser Anzahl von Teilbelichtungen erfasst wird.

Der Auslesevorgang bei einer solchen Gruppierung der Bildsensorzeilen kann dabei wiederum, wie zuvor, über eine einzige Auslesezeile durchgeführt werden, in welche die aufaddierten elektrischen Ladungen verschoben werden und aus der diese ausgelesen werden. Alternativ, und zur weiteren Beschleunigung des Bilderfassungsverfahrens, kann jedoch auch vorgesehen sein, dass mehrere Auslesezeilen, beispielsweise für jede der Bildsensorgruppen, vorgesehen sind, in welche dann entsprechend die aufaddierten elektrischen Ladungen aus jeder Bildsensorzeilengruppe verschoben und entsprechend ausgelesen werden.

Noch weiter ist es bevorzugt, wenn
- jede Teilbelichtung jeder Objektzeile durch eine permanente Strahlungsaufnahme aus der Objektzeile in den Bildsensorelementen erfolgt und
- jede Teilbelichtung durch eine Transfer-Pulsgruppe beendet wird, welche einen Transfer der Ladung in ein jeweiliges, dem jeweiligen Bildsensorelement zugeordnetes Schieberegisterelement veranlasst,
- wobei zwei aufeinanderfolgende Transfer-Pulsgruppen um das Zeitintervall delta t voneinander beabstandet sind und
- zwischen diesen aufeinanderfolgenden Transfer-Pulsgruppen eine Transport-Pulsgruppe auf die Schieberegisterelemente ausgegeben wird, welche veranlasst, dass die elektrischen Ladungen aus einem Schieberegisterelement einer m-1-ten Zeile in ein Schiebregisterelement einer m-ten Zeile transportiert werden.

Hierbei ist unter Pulsgruppe eine Mehrzahl von Pulsen zu verstehen, die zeitlich simultan oder gestaffelt im Sinne einer Phasenverschiebung der Pulse sein können, um die zuvor erläuterte Verschiebung von Ladungen innerhalb eines Schieberegisters zu bewirken, das durch mehrere Schieberegisterelemente aufeinanderfolgender Bildsensorzeilen gebildet wird, um im Falle der Staffelung jeweils zu ermöglichen, dass Schieberegisterelemente durch Verschiebung geleert werden, bevor in diese Schieberegisterelemente wiederum eine Ladung verschoben wird. Dabei besteht in der Regel jedes Schieberegisterelement, welches jeweils einem Bildsensorelement zugeordnet ist, aus einem ersten, einem zweiten und gegebenenfalls weiteren Schieberegisterteilelementen. In der Regel werden alle ersten Schieberegisterteilelemente des Bildsensors mit einem gemeinsamen ersten Puls angesteuert, alle zweiten Schieberegisterteilelemente des Bildsensors mit einem gemeinsamen zweiten Puls, und gegebenenfalls weitere Schieberegisterteilelemente des Bildsensors mit weiteren gemeinsamen Pulsen. Die zahlreichen getrennten Ladungspakete eines Bildsensors können berührungsfrei transportiert werden, indem sie mittels eines ersten gemeinsamen Pulses simultan von den ersten Schieberegisterteilelementen in die zweiten, zuvor geleerten Schieberegisterteilelemente übergeleitet werden, wodurch wiederum die ersten Schieberegisterteilelemente geleert werden, und nachfolgend von den zweiten Schieberegisterteilelementen simultan in gegebenenfalls weitere Schieberegisterteilelemente und von diesen in die nun leeren ersten Schieberegisterteilelemente der benachbarten, nachfolgenden Zeile oder andernfalls von den zweiten Schieberegisterteilelementen in die nun leeren ersten Schieberegisterteilelemente der benachbarten, nachfolgenden Zeile übergeleitet werden. Die ersten, zweiten und gegebenenfalls weiteren Pulse, die diesen Vorgang steuern, erfolgen zueinander phasenversetzt und bilden in diesem Sinne eine Pulsgruppe, deren Aktivität jeweils den berührungsfreien Transport der zahlreichen Ladungspakete des Bildsensors aus den Schieberegisterelementen der jeweiligen Zeile in die Schieberegisterelemente der jeweils benachbarten, nachfolgende Zeile bewirkt. Delta t beschreibt in diesem Fall den zeitlichen Abstand der jeweils korrespondierenden Einzelpulse zweier aufeinanderfolgender Pulsgruppen zueinander, nicht den zeitlichen Abstand der Einzelpulse innerhalb einer Pulsgruppe.

Noch weiter ist es bevorzugt, wenn
- ein externes Signal eingelesen wird, welches eine Information über die relative Bewegungsgeschwindigkeit zwischen dem Bildsensor und dem Objekt enthält, und
- die Länge des Zeitintervalls delta t in Abhängigkeit von dem Wert dieses externen Signals unter Berücksichtigung des vorbestimmten Abstands zwischen zwei aufeinanderfolgend mit der gleichen Objektzeile zu belichtenden Bildsensorzeilen und dem Abbildungsstrahlengang zwischen Objekt und Bildsensor bestimmt wird.

Die Qualität der Bilderfassung nach dem erfindungsgemäßen Verfahren hängt unter anderem maßgeblich davon ab, dass die Relativgeschwindigkeit zwischen Objekt und Bildsensor sowie der Abbildungsmaßstab, also im Ergebnis die sich auf dem Bildsensor ergebende Geschwindigkeit der Abbildung einer Objektzeile bekannt ist und bei der Steuerung der zeilenförmigen Bilderfassung exakt berücksichtigt werden kann. Die Genauigkeit, mit der das Zeitintervall delta t bestimmt wird, gibt als eine maßgebliche Ausgangsgröße vor, über wie viele Bildsensorzeilen eine Objektzeile in aufeinanderfolgenden Teilbelichtungen erfasst werden kann.

Eine Abweichung vom tatsächlichen Wert der Relativgeschwindigkeit nach einer bestimmten Folgezahl von Teilbelichtungen ein und derselben Objektzeile führt zu einer unerwünschten Verschiebung dieser Objektzeile außerhalb der berechneten Bildsensorzeile, was zu einer unzutreffenden Aufaddierung von elektrischen Ladungen und somit Minderung der Bildqualität (Unschärfe) führt. Daher ist die Anzahl der Teilbelichtungen in Abhängigkeit der Genauigkeit der Synchronisierung zur Relativgeschwindigkeit entsprechend zu beschränken. Insbesondere ist es vorteilhaft, wenn zur Erhöhung der Genauigkeit der für die Bilderfassung berücksichtigten Relativgeschwindigkeit ein externes Signal eingelesen wird, das ein Maß für diese Relativgeschwindigkeit ist, um hierdurch auch auf etwaige Veränderungen dieser Relativgeschwindigkeit bei der Teilbelichtungssteuerung reagieren zu können.

Dabei ist es insbesondere bevorzugt, wenn als externes Signal das Signal eines Drehgebers oder Lineargebers einer Fördervorrichtung verwendet wird, welches die zu erfassenden Objekte fördert, wobei insbesondere das externe Signal ein analoges Signal ist, dessen Signalhöhe ein Maß für die Relativgeschwindigkeit ist oder ein aus aufeinanderfolgenden Pulsen bestehendes digitales Signal ist, dessen Pulsfolgefrequenz ein Maß für die Relativgeschwindigkeit ist, insbesondere dessen Pulsfolgefrequenz dem Kehrwert von delta t entspricht oder ein ganzzahliges Vielfaches hiervon ist. Mit diesen bevorzugten Ausgestaltungen des externen Signals wird eine unmittelbare und zuverlässige Signalverarbeitung dieses externen Signals in der Bilderfassung ermöglicht und hierdurch eine hohe Synchronisationsgenauigkeit zwischen den einzelnen Teilbelichtungen und dem räumlichen Fortschritt der Objektzeilen erzielt.

Gemäß einer weiteren bevorzugten Ausführungsform ist vorgesehen, dass
- die Länge des Zeitintervalls delta t über eine vorbestimmte Anzahl von aufeinanderfolgenden Teilbelichtungen oder Teilbelichtungsgruppen zwischen zwei Randwerten variiert wird,
- die Bildqualität der aus diesen Teilbelichtungen oder Teilbelichtungsgruppen erzielten Objekterfassungen anhand vorbestimmter Kriterien wie Schärfe, Signal zu Rausch-Verhältnis, Belichtungshöhe, Kontrast beurteilt wird,
- die Teilbelichtung oder Teilbelichtungsgruppe ermittelt wird, welche das beste Qualitätsergebnis erreicht hat, und
- die Länge des Zeitintervalls delta t oder die Größe der Randwerte für nachfolgende Teilbelichtungen anhand des delta t dieser Teilbelichtung oder Teilbelichtungsgruppe mit dem besten Qualitätsergebnis bestimmt wird.

Mit dieser Fortbildung wird eine Methode bereitgestellt um die relative Bewegungsgeschwindigkeit zwischen Objekt und Bildsensor innerhalb des Verfahrens zu ermitteln. Die Fortbildung eignet sich insbesondere für die Bilderfassung diskontinuierlich bewegter Objekte insbesondere bei langsamer Geschwindigkeitsänderung der Objekte. Die Ermittlung erfolgt in der Art eines kontinuierlichen Optimierungsprozesses indem die Prozessgröße delta t variiert und anhand festgelegter Kriterien optimiert wird.

Gemäß einer weiteren bevorzugten Ausführungsform ist vorgesehen, dass
- die relative Bewegungsgeschwindigkeit und/oder -richtung zwischen Objekt und Bildsensor ermittelt wird, und
- die Anzahl der Sensorzeilen, um welche die Ladungen in einem Transportschritt zwischen zwei unmittelbar aufeinander folgenden Teilbelichtungen bewegt werden und/oder die Richtung dieses Transportschritts anhand der Bewegungsgeschwindigkeit bzw. -richtung bestimmt wird.

Auch diese Fortbildung führt dazu, dass das erfindungsgemäße Verfahren für diskontinuierliche Relativbewegungen optimiert wird, wie sie beispielsweise auftreten, wenn ein Objekt über eine Schüttelrutsche oder mittels Förderbändern ohne eine exakte Gleichlaufregelung bewegt wird und hierbei bilderfasst werden soll. Die Bestimmung von Höhe und/oder Richtung der Geschwindigkeit kann aus systemimmanenten Signalen, beispielsweise wie zuvor beschrieben oder spezifisch hierfür genutzten Bildsensorbereichen mit Objektkonturerkennung oder dergleichen erfolgen oder es können hierfür externe Signale, wie zuvor beschrieben, genutzt werden. Dies ermöglicht es, die Ladungen nach einer Teilbelichtung gezielt um keine oder mehrere Zeilen in einer bestimmten Richtung zu transportieren, um die folgende Teilbelichtung genau in derjenigen Objektzeile durchzuführen, in deren Schiebregisterelemente die Ladungen aus der vorhergehenden Teilbelichtung transportiert werden.

Gemäß einer weiteren bevorzugten Ausführungsform werden vor der ersten Teilbelichtung der ersten Objektzeile die Bildsensorelemente auf einen vorbestimmten Ausgangswert gesetzt, insbesondere mittels einer Startpulsgruppe entleert. Hierdurch können etwaige in den Bildsensor- oder Schieberegisterelementen verbliebene Ladungen vor der Erfassung eines Objekts gelöscht werden, um eine fehlerfreie Bilderfassung zu ermöglichen.

Gemäß einer weiteren bevorzugten Ausführungsform werden der Beginn der Teilbelichtung in den Bildsensorelementen einer Objektzeile mittels Pulsen eines ersten Signals und die Anzahl der Teilbelichtungen dieser Objektzeile mittels Pulsen eines zweiten Signals gesteuert, wobei die Pulse des zweiten Signals insbesondere einem Drehgeber oder Lineargeber entstammen, der die Relativgeschwindigkeit einer Fördervorrichtung erfasst, welches die zu erfassenden Objekte fördert. Bei dieser Ausführungsform wird durch insgesamt zwei Signalleitungen, auf denen Pulse in entsprechender, aufeinander abgestimmter Folge auf die Bildsensor- und Schieberegisterelemente aufgegeben werden, die Bilderfassung in zuverlässiger Weise nach dem erfindungsgemäßen Prinzip gesteuert.

Dabei ist es besonders bevorzugt, wenn die Dauer der Teilbelichtungen einer Objektzeile der Pulsdauer des ersten Signals entspricht.

Gemäß einer weiteren bevorzugten Ausführungsform wird die Anzahl der Teilbelichtungen einer Objektzeile durch eine zeitliche Befristung oder eine vorbestimmte Anzahl bestimmt. Dies erlaubt den Entfall einer insoweit logischen Begrenzung der Anzahl der Strahlungserfassungen, indem diese zeitlich oder anzahlmäßig beschränkt werden, wobei zu verstehen ist, dass diese zeitliche oder anzahlmäßige Beschränkung im Vorfeld, beispielsweise in Abhängigkeit der Beleuchtungsverhältnisse des Objekts, vorbestimmt werden kann.

Gemäß einer weiteren bevorzugten Ausführungsform ist vorgesehen, dass ein digitaler Datenkanal verwendet wird, um die Anzahl und Zeitpunkte der Teilbelichtungen einer Objektzeile zu steuern, wobei
a. durch ein Datenpaket eines ersten Typus eine Objektzeilenteilbelichtung gestartet wird,
b. durch aufeinanderfolgende Datenpakete eines zweiten Typus jeweils aufeinanderfolgende Teilbelichtungen dieser Objektzeile gestartet werden, und
c. durch ein Datenpaket eines dritten Typus, nach einer vorbestimmten Anzahl von Teilbelichtungen derselben Objektzeile oder nach einer vorbestimmten Zeitspanne die Auslesung der aus der mehrfachen Teilbelichtungen der Objektzeile resultierenden, aufaddierten elektrischen Ladungen gestartet wird.

Durch diese Fortbildung wird mittels eines einzigen digitalen Datenkanals die Ansteuerung der Bildsensor- und Schieberegisterelemente erreicht, indem jeweils entsprechend charakteristische Datenpakete für die einzelnen Verschiebeschritte Nullungsschritte, Ausleseschritte eingesetzt werden.

Gemäß einer weiteren bevorzugten Ausführungsform wird eine Gruppe von Bildsensorzeilen des Bildsensors dazu verwendet, mittels einer Objekterkennung und Mehrfachbelichtung die relative Geschwindigkeit zwischen Objekt und Bildsensor zu bestimmen und die solcherart bestimmte relative Geschwindigkeit wird dazu verwendet, das Zeitintervall delta t für die zeilenförmige Bilderfassung des Objekts gemäß einem der vorhergehenden Verfahren zu steuern. Diese Fortbildung beruht auf der Erkenntnis, dass insbesondere die durch das erfindungsgemäße Verfahren ermöglichte zeilenförmige Bilderfassung von Objekten mittels IL-CCD-Bildsensoren den Zugriff auf kostengünstige Bildsensoren mit einer Vielzahl von Bildsensorzeilen erlaubt. Typischerweise werden für die zeilenförmige Objekterfassung jedoch nicht alle Bildsensorzeilen benötigt, sondern nur ein geringer Anteil der verfügbaren Bildsensorzeilen, wodurch ein anderer Bereich des IL-CCD-Bildsensors für andere Zwecke, wie beispielsweise die zuvor erläuterte Bestimmung der Relativgeschwindigkeit genutzt werden kann, indem die Bewegungsgeschwindigkeit einer markanten, mittels Bilderkennung erfassbaren Struktur über diesen abgetrennten Bildsensorbereich bestimmt wird.

Gemäß einer noch weiteren bevorzugten Ausführungsform ist vorgesehen, dass die Bewegungsrichtung des Objekts relativ zum Bildsensor erfasst wird, vorzugsweise an der in den einzelnen Bilderfassungsvorgängen des zeilenförmigen Bilderfassungsvorgangs des Objekts erfasste Daten oder mittels eines abgetrennten Bereichs von Bildsensorzeilen des Bildsensors, um hierdurch entweder den Bildsensor solcherart zu der Relativbewegungsrichtung auszurichten, dass diese Relativbewegungsrichtung genau so liegt, dass zwei benachbart zueinander liegende Bildsensorelemente unterschiedlicher Bildsensorzeilen exakt in Bewegungsrichtung liegen, oder dass eine Kompensation eines Winkelfehlers zwischen der Relativbewegungsrichtung und der Ausrichtung der benachbarten Bildsensorelemente zweier benachbarter Bildsensorzeilen erfolgt, beispielsweise indem die zeilenförmige Erfassung nur so oft wiederholt wird, wie der Winkelfehler nicht zu einem Versatz um eine Bildsensorelementspalte führt. So könnte der Bildsensor beispielsweise drehbar gelagert sein und vorzugsweise mittels exzentrisch angreifender Piezoelemente drehbar sein, um ihn exakt zur Bewegungsrichtung zwischen Objekt und Bildsensor auszurichten, vorzugsweise also die Spalten von spaltenweise angeordnete Bildsensorelementen parallel zur Relativbewegungsrichtung der Abbildung des Objekts auf dem Sensor auszurichten.

Ein weiterer Aspekt der Erfindung ist eine Vorrichtung zur zeilensequentiellen Bilderfassung eines in einer Y-Richtung relativ zu einem Bildsensor bewegten Objekts, umfassend:
a) einen CCD-Flächensensor mit einer Vielzahl von Bildsensorzeilen, in denen jeweils eine Vielzahl von strahlungsempfindlichen Bildsensorelementen und eine entsprechende Vielzahl von strahlungsunempfindlichen Schieberegisterelementen angeordnet sind, von denen jedes Schieberegisterelement einem Bildsensorelement zugeordnet ist und die Bildsensorelemente mehrerer Bildsensorzeilen des Bildsensors in Spalten zueinander angeordnet und die Schieberegisterelemente mehrerer Bildsensorzeilen des Bildsensors in Spalten zueinander angeordnet sind,
b) wobei sich die Bildsensorzeilen in einer X-Richtung erstrecken und sich die von den Bildsensorelementen und Schieberegisterelementen gebildeten Spalten in einer Y-Richtung erstrecken, die der Relativbewegungsrichtung zwischen Bildsensor und Objekt entspricht und die vorzugsweise senkrecht zur X-Richtung liegt,
c) eine Aufnahmesteuerungseinheit, welche ausgebildet ist,
   - um zu einem Zeitpunkt tₐ-1 den Transfer einer elektrischen Ladung aus den Bildsensorelementen einer a-1-ten Bildsensorzeile in die Schieberegisterelemente dieser Bildsensorzeile und gegebenenfalls die Addition dieser Ladung zu einer bereits in diesen Schieberegisterelementen vorhandenen Ladung zu veranlassen,
   - um zu einem nachfolgenden Zeitpunkt den Transport der elektrischen Ladung aus den Schieberegisterelementen der a-1-ten Bildsensorzeile in die Schieberegisterelemente einer in y-Richtung um die Distanz dy beabstandeten a-ten Bildsensorzeile zu veranlassen
   - um zu einem weiter nachfolgenden Zeitpunkt tₐ den Transfer einer elektrischen Ladung aus den Bildsensorelementen der a-ten Bildsensorzeile in die Schieberegisterelemente dieser a-ten Bildsensorzeile und die Addition dieser Ladung und einer gegebenfalls bereits in diesen Schieberegisterelementen vorhandenen Ladung zu veranlassen,
   - wobei der Zeitpunkt tₐ um ein Zeitintervall delta t zu dem a-1-ten Zeitpunkt tₐ₋₁ versetzt ist, und
   - das Zeitintervall delta t so bemessen ist, dass das Objekt sich innerhalb dieses Zeitintervalls delta t um eine solche Distanz relativ zu dem Bildsensor bewegt hat, dass sich die Abbildung einer Objektzeile zum Zeitpunkt tₐ um eine Distanz dy auf dem Bildsensor verschoben hat und auf die Bildsensorelemente der a-ten Bildsensorzeile abgebildet wird,
   - und wobei a eine ganzzahlige Zahl zwischen 2 und m ist und dy der Abstand zwischen der a-1-ten und a-ten Bildsensorzeile ist,
   - und um die aufaddierten elektrischen Ladungen aus den jeweiligen Schieberegisterelementen nach m Teilbelichtungen derselben Objektzeile in jeweils ein strahlungsunempfindliches Schieberegisterelement einer Auslesezeile zu verschieben, und
   - um abschließend die aufaddierten elektrischen Ladungen aus den Schieberegisterelementen der Auslesezeile auszulesen, um aus den Ladungen eine Bildinformation über die Objektzeile zu erhalten.

Die solcherart ausgebildete Vorrichtung eignet sich insbesondere zur Durchführung des zuvor beschriebenen erfindungsgemäßen Verfahrens. Sie weist insbesondere den Vorteil auf, dass sie eine zeilenförmige Objekterfassung unter Verwendung eines IL-CCD-Flächensensors ermöglicht, was eine kostengünstige Herstellung einer Zeilenkamera erlaubt. Dabei kann ein Schieberegisterelement ein oder mehrere, typischerweise zwei bis vier MOS-Dioden umfassen, die einem Bildsensorelement zugeordnet sind.

Die erfindungsgemäße Verwendung von IL-CCD-Flächensensoren zur zeilenförmigen Bilderfassung eines Objekts ermöglicht einerseits eine signifikante Reduktion der Herstellungskosten von Zeilenkameras und andererseits eine bedeutsame Steigerung der Qualität von zeilenförmig erfassten Objektbildern, da hierdurch auf eine Vielzahl von Bildsensorzeilen zurückgegriffen werden kann. Diese erfindungsgemäße Verwendung wird durch das zuvor erläuterte Verfahren bzw. die zuvor erläuterte Vorrichtung ermöglicht.

Schließlich ist ein weiterer Aspekt der Erfindung ein Computerprogrammprodukt zur Ausführung auf einem Computer, welches dazu gekennzeichnet ist, dass es die Schritte eines der zuvor erläuterten Verfahren ausführt, wenn es auf einem Computer ausgeführt wird. Unter einem Computer ist im Zusammenhang dieser Beschreibung und den anhängenden Ansprüchen ein digitaler Rechner, beispielsweise ein Embedded System, ein digitaler Signalprozessor (DSP) oder ein Field Programmable Gated Array (FPGA) zu verstehen.

Die Erfindung wird nachfolgend anhand von Figuren weiter erläutert, welche einige bevorzugte Ausführungsformen schematisch darstellen. Es zeigen:
- Fig. 1:: eine grundsätzliche schematische Darstellung der Abbildungssituation eines relativ bewegten Objekts auf einem Bildsensor,
- Fig. 2:: eine schematische Darstellung der Ausgestaltung eines CCD-Bildsensors zur Durchführung des erfindungsgemäßen Verfahrens,
- Fig. 3a-h:: eine schematische Darstellung des Ablaufs von zwei Teilbelichtungen mit Transfer und Transportvorgängen gemäß des erfindungsgemäßen Verfahrens,
- Fig. 4a-d:: eine weitere schematische Darstellung der Teilbelichtungs-, Transfer- und Transportvorgänge bei der Bilderfassung mittels eines erfindungsgemäßen Verfahrens,
- Fig. 5:: eine Darstellung von Signalverläufen zur Steuerung des erfindungsgemäßen Verfahrens,
- Fig. 6a-i:: alternative Ausgestaltungen von Signalfolgen zur Steuerung des erfindungsgemäßen Verfahrens,
- Fig. 7:: eine schematisierte Darstellung der erfindungsgemäßen Bilderfassung unter besonderer Berücksichtigung von Effekten im Anfangsund Endbereich des Bilderfassungsvorgangs,
- Fig. 8:: eine schematische Darstellung einer Fortbildung des erfindungsgemäßen Verfahrens mit gestaffelter und zeitlich überschneidender Bilderfassung in insgesamt drei Erfassungsbereichen,
- Fig. 9:: eine schematische Darstellung von zwei alternativen Fortbildungen des erfindungsgemäßen Verfahrens mit gestaffelter Anordnung von mehreren Bildsensorbereichen oder Bildsensoren,
- Fig. 10:: einen Transponierungsvorgang zur Anpassung der Bildsensorerstreckung an die Bewegungsrichtung der Relativbewegung zwischen Bildsensor und Objekt,
- Fig. 11:: ein schematisches Diagramm einer Anpassung der Synchronisation der Transportvorgänge innerhalb des Bildsensors an eine sich ändernde Relativgeschwindigkeit zwischen Objekt und Bildsensor, und
- Fig. 12.1: und 12.2 eine Abfolge von Schritten einer flächensequentiellen Belichtung mit nachfolgendem Transfer und Transport.

In den Figuren ist die Transferrichtung mit "x" und die Transportrichtung mit "y" gekennzeichnet.

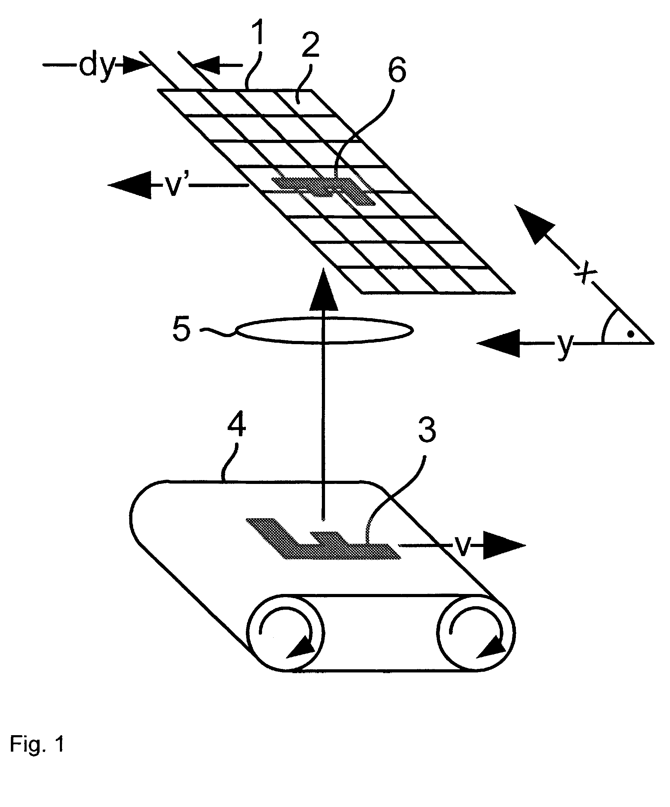

Bezug nehmend auf Figur 1 ist ein Objekt 3, hier symbolisch durch einen Buchstaben "F" dargestellt, auf einem Endlos-Förderband 4 angeordnet und hierdurch auf der Oberfläche des Endlos-Förderbandes mit der Geschwindigkeit v bewegt.

Das Objekt wird durch von dem Objekt reflektierte Lichtstrahlung durch eine Abbildungsoptik 5 auf einen Bildsensor 1 abgebildet. Der Bildsensor 1 umfasst eine Mehrzahl von Bildsensorelementen 2, die in Bildsensorzeilen und Bildsensorspalten angeordnet sind. Definitionsgemäß für die vorangehende und nachfolgende Beschreibung sowie die Patentansprüche erstrecken sich die Bildsensorzeilen in X-Richtung und die Bildsensorspalten in Y-Richtung.

Wie ersichtlich, wird das Objekt 3 durch die Abbildungsoptik 5 sowohl um die X-Achse als auch um die Y-Achse gespiegelt und hierdurch seitenverkehrt und kopfstehend auf dem Bildsensor 1 abgebildet. Die zwischen Bildsensor und Objekt auftretende Relativgeschwindigkeit v wirkt sich somit in einer Abbildungsgeschwindigkeit v' aus, mit der sich das abgebildete Objekt 3 über den Bildsensor 1 bewegt. Die Abbildungsgeschwindigkeit v' ist entgegengesetzt zur Objektgeschwindigkeit v und ihre Größe ist im Fall einer verkleinernden Abbildung geringer. Maßgeblich für die Durchführung des erfindungsgemäßen Verfahrens ist der Zeitraum delta t, in dem sich ein Bildpunkt des abgebildeten Objektes 6 um die Distanz dy weiterbewegt, welche den Abstand der Mittelpunkte von zwei benachbarten Bildsensorelementen 2 darstellt.

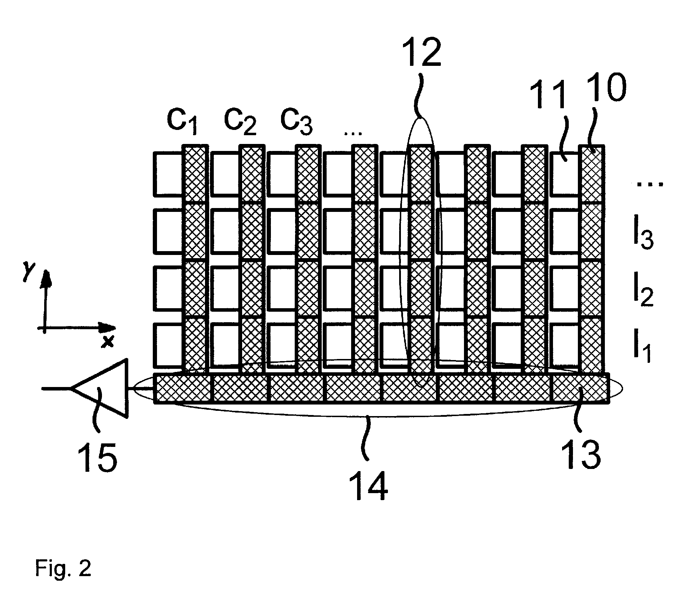

Figur 2 zeigt eine schematische Anordnung der Bildsensor- und Schieberegisterelemente eines Bildsensors zur Durchführung des erfindungsgemäßen Verfahrens. Der Bildsensor wird durch Bildsensorzeilen I1, I2, I3..., Bildsensorspalten C1, C2, C3... gebildet. In jeder Bildsensorzeile sind alternierend Bildsensorelemente 11 und Schieberegisterelemente 10 angeordnet, wobei jedem Bildsensorelement 11 ein Schieberegisterelement 10 zugeordnet ist. Hierdurch ergibt sich eine spaltenförmige Anordnung von jeweils in einer Spalte C1 übereinanderliegenden Bildsensorelementen und diesen zugeordneten Schieberegisterelementen.

Jedes Bildsensorelement 11 ist elektrisch solcherart mit einem Schieberegisterelement 10 gekoppelt, dass eine Ladung aus dem Bildsensorelement 11 in das Schieberegisterelement 10 verschoben werden kann. Weiterhin sind die Schieberegisterelemente 10 einer Spalte elektrisch miteinander gekoppelt, dass Ladungen zwischen den Schieberegisterelementen unterschiedlicher Zeilen transportiert werden können.

Die Bildsensorelemente 11 sind strahlungsempfindlich und können daher einfallende Strahlung in elektrische Ladung wandeln. Die Schieberegisterelemente 10 sind lichtunempfindlich und verändern ihren Ladungszustand daher nicht durch einfallende Strahlung.

In der untersten Zeile 14 sind keine Bildsensorelemente angeordnet, sondern ausschließlich Schieberegisterelemente, die strahlungsunempfindlich sind. Jeder Spalte C1, C2, C3 ist jeweils ein Schieberegisterelement 13 der unteren Zeile 14 zugeordnet. Die untere Zeile von Schieberegisterelementen bildet somit ein sogenanntes horizontales CCD (HCCD) während die Schieberegisterelemente 12 einer Spalte ein vertikales CCD (VCCD) bilden.

Alle Schieberegisterelemente 13 der HCCD-Zeile sind elektrisch miteinander gekoppelt, so dass elektrische Ladungen aus diesen Schieberegisterelementen 13 über einen Verstärker 15 ausgelesen werden können.

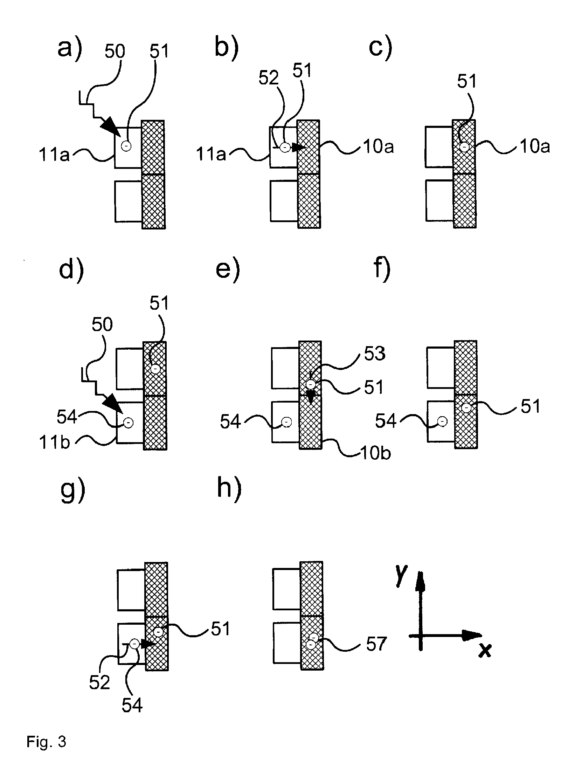

Figur 3 erläuterte schematisch den Ablauf der erfindungsgemäßen Bilderfassung in einem zeitlichen Ausschnitt über zwei Teilbelichtungen mit nachfolgendem Transfer/Transport.

Die erste Teilbelichtung beginnt gemäß Figur 3a durch eine einfallende Strahlung 50 von einem Bereich einer Objektzeile auf das Bildsensorelement 11a der hier ausschnittsweise abgebildeten oberen Bildsensorzeile. Diese einfallende Strahlung 50 erzeugt in dem Bildsensorelement 11a eine elektrische Ladung 51.

Die elektrische Ladung 51 wird durch einen Transfervorgang 52 gemäß Figur 3 in ein dem Bildsensorelement 11a zugeordnetes Schieberegisterelement 10a transferiert, woraufhin das Bildsensorelement 11a gemäß Figur 3c Ladung freigibt und somit für eine erneute Teilbelichtung vorbereitet ist und das Schieberegisterelement 10a die Ladung 51 enthält.

Zu einem nachfolgenden Zeitpunkt hat sich durch Relativbewegung des Objekts der Teilbereich der Objektzeile, welcher die Strahlung 50 aussendet, fortbewegt und die Strahlung 50 fällt nun auf das unterhalb des Bildsensorelements 11a liegende Bildsensorelement 11b. Wiederum wird durch die einfallende Strahlung 50 in dem Bildsensorelement 11 b eine elektrische Ladung 54 erzeugt.

In einem Transportschritt gemäß Figur 3e wird die elektrische Ladung 51 durch eine Transportbewegung 53 aus dem Schieberegisterelement 10a der oberen Spalte in ein Schieberegisterelement 10b verschoben, welches dem Bildsensorelement 10b zugeordnet ist. Hierauf folgend liegen die elektrische Ladung 51 aus dem ersten Teilbelichtungsvorgang des Bildsensorelements 11a und die elektrische Ladung 54 aus dem zweiten Teilbelichtungsvorgang des Bildsensorelements 11 b in der unteren Spalte gemäß Figur 3f vor.

In einem nachfolgenden Transferschritt gemäß Figur 3g wird die elektrische Ladung 54 mittels einer Transferbewegung 52 aus dem Bildsensorelement 11 b in das Schieberegisterelement 10b verschoben und hierdurch zu der dort bereits vorhandenen elektrischen Ladung 51 hinzuaddiert. Es resultiert hieraus akkumulierte elektrische Ladung 57, die sich in dem Schieberegisterelement 10b der unteren Zeile gemäß Figur 3h befindet.

Es ist zu verstehen, dass der Transportvorgang 53 zwischen dem Schieberegisterelement 10a und 10b in Figur 3e auch zu einem früheren Zeitpunkt stattfinden kann, beispielsweise bevor die Belichtung des Bildsensorelements 11 b erfolgt. In diesem Fall wird die elektrische Ladung 54 erst zu einem Zeitpunkt in dem Bildsensorelement 11 b erzeugt, wenn bereits die elektrische Ladung 51 in dem Schieberegisterelement 10b vorliegt.

Weiterhin ist zu verstehen, dass die Transportbewegung 53 der elektrischen Ladung 51 a zu einem späteren Zeitpunkt erfolgen kann, beispielsweise wenn die elektrische Ladung 54 bereits in das Schieberegisterelement 10b verschoben wurde, so dass die Addition der beiden elektrischen Ladungen dann als nicht als Folge des Transfervorgangs 52, sondern als Folge des Transportvorgangs 53 erfolgt.

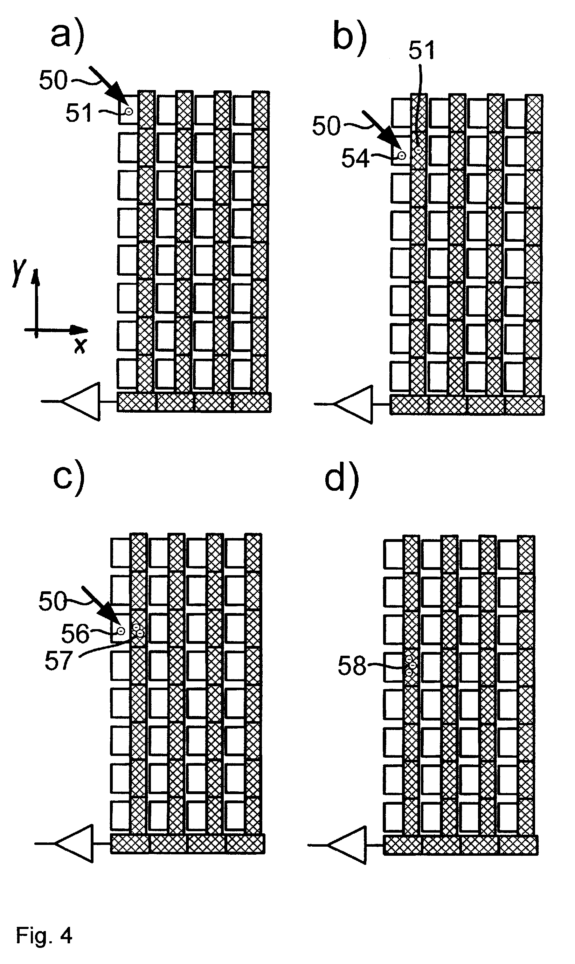

Figur 4 zeigt die logische Fortführung des erfindungsgemäßen Bilderfassungsverfahrens. In den Figuren 4a-b ist die erfindungsgemäße Teilbelichtung der Bildsensorelemente in der ersten Zeile mit den entsprechenden Transfer- und Transportvorgängen bis zu dem Zeitpunkt gezeigt, wo durch einen Transfer der elektrischen Ladung 54 in das entsprechende Schieberegisterelement, welches bereits die elektrische Ladung 51 aus der ersten Teilbelichtung enthält, eine Addition dieser beiden elektrischen Ladungen erfolgen würde. Wie aus Figur 4c ersichtlich, werden in einem auf diese, durch den Transfer der Ladung 54 erreichte Addition folgenden Schritt die so addierten zwei Ladungen aus den ersten zwei Teilbelichtungen weiter in ein Schieberegisterelement der dritten Zeile entlang des VCCDs verschoben, der durch die Schieberegisterelemente der ersten Spalte gebildet wird. Zugleich liegt eine elektrische Ladung 56 in dem zu diesem Schieberegisterelement der dritten Zeile zugehörigen Bildsensorelement vor, das wiederum durch Transfer in das bereits mit den beiden elektrischen Ladungen 57 belegte Schieberegisterelement addiert wird, so dass nun die durch drei Teilbelichtungen erzeugten elektrischen Ladungen in dem Schieberegisterelement der dritten Zeile vorliegen. Diese drei addierten elektrischen Ladungen 58 werden dann, wie aus Figur 4d ersichtlich, wiederum eine Zeile nach unten transportiert und anschließend ohne weitere Teilbelichtungen ausgelesen. Dazu wird die Ladung zunächst durch das VCCD nach unten und nachfolgend durch das HCCD nach links zum Ausleseverstärker verschoben.

Es ist zu verstehen, dass zu den elektrischen Ladungen 58 auch analog durch Transfer weitere elektrische Ladungen aus einer Teilbelichtung des diesbezüglich zugehörigen Bildsensorelements weiter kumuliert werden können. Die so definierte Abfolge von Belichtung, Transfer und Transport wird mehrfach (m-fach) wiederholt, wobei m insbesondere durch die begrenzte Genauigkeit der Synchronisation zwischen Relativbewegung des Objekts und Ladungsverschiebung (also ein sich in Y-Richtung entlang der Spalten auswirkenden Fehler) sowie durch eine konstruktiv begrenzte Genauigkeit der Ausrichtung der Bildsensorspalten zu der Relativbewegung des Objekts (also einen sich in X-Richtung auswirkenden Fehlerversatz) begrenzt wird.

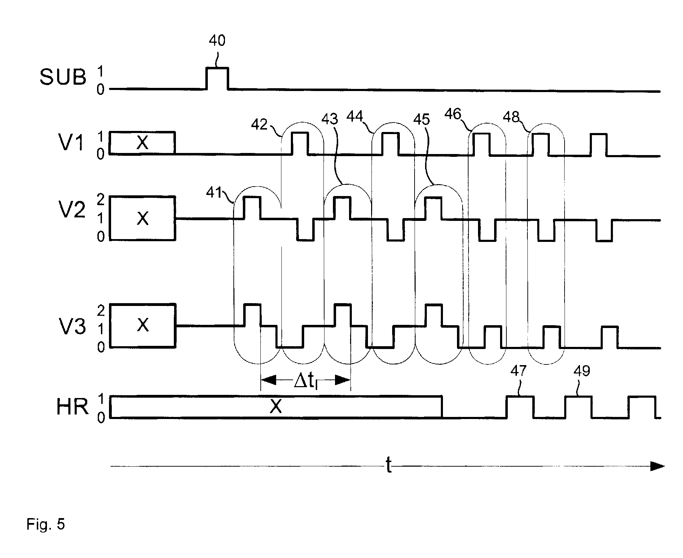

Figur 5 zeigt symbolisch die Steuerung der erfindungsgemäßen Bilderfassung mittels fünf Signalen

Die Bilderfassung wird zunächst initialisiert, indem durch einen Puls 40 eines Signals SUB die Fotoladungen aus allen lichtempfindlichen Bildsensorelementen entfernt werden. Hierdurch beginnt die Belichtung der Bildsensorelemente und die entsprechende Umwandlung der einfallenden Strahlung in entsprechende Ladungen in den Bildsensorelementen.

Die so erfolgende erste Teilbelichtung wird zu einem Zeitpunkt t1 beendet, indem durch eine Pulsgruppe 41 zu einem Zeitpunkt t1 über die Signale V2 und V3, die eine Zustandsänderung von 1 auf 2 innerhalb des Pulses ausführen, ein Transfer der elektrischen Ladungen aus dem Bildsensorelement in die jeweils jedem Bildsensorelement zugeordneten Schieberegisterelement erfolgt. Zugleich mit diesem Transfer startet zum Zeitpunkt t1 die zweite Teilbelichtung der Bildsensorelemente.

Nach der Pulsgruppe 41 liegen die aus der ersten Teilbelichtung erzeugten Ladungen noch in derselben Zeile vor, in der auch die Belichtung der entsprechenden Bildsensorelemente erfolgte.

Nachfolgend zu dem Transfer durch die Pulsgruppe 41 wird durch eine Pulsgruppe 42 der Signale V1, V2 und V3 ein Ladungstransport ausgelöst, durch den die Ladungen innerhalb der Schieberegisterspalten, also innerhalb der Mehrzahl der VCCDs, um eine Zeile verschoben werden.

Nachfolgend wird mit der Periode delta t zu einem Zeitpunkt t2 durch eine Pulsgruppe 43 ein erneuter Transfer der Ladungen aus den Bildsensorelementen in die zugehörigen Schieberegisterelemente ausgelöst. Hierdurch wird die zweite Teilbelichtung beendet. Das Zeitintervall delta t ist hierbei so zu wählen, dass die aus dem Abbildungsmaßstab resultierende Bewegung des relativ zur Optik bewegten Objekts auf dem Bildsensor einer solchen Distanz entspricht, dass eine Objektzeile, die zuvor auf eine Bildsensorzeile abgebildet wurde, nun auf diejenige Bildsensorzeile abgebildet wird, in deren Schieberegisterelement die Ladung aus der vorhergehenden Teilbelichtung verschoben wurde.

Die durch die Pulsgruppe 43 ausgelösten Transfers sind wiederum durch Transporte aus einer Pulsgruppe 44 gefolgt, die eine Ladungsverschiebung innerhalb der Schieberegisterelemente einer Spalte um eine Zeile bewirken.

Dieser Vorgang von Pulsgruppen 41, 43, 45 zur Auslösung von Transfers aus Bildsensorelementen in Schieberegisterelemente und jeweils folgenden Pulsgruppen 42, 44, 46 zur Auslösung von Transport aus Schieberegisterelementen innerhalb einer Spalte in die jeweils für die nächste Belichtung dienende Zeile kann zyklisch bis zu einer m-ten Teilbelichtung wiederholt werden. Mit dem letzten, also m-ten Transfer, der in Figur 5 durch die Pulsgruppe 45 dargestellt ist, wird die letzte Teilbelichtung vorgenommen. Nachfolgend erfolgen zum Auslesen nur noch Transporte 46 und 48 sowie zahlreiche weitere, identische Transportschritte zwischen denen jeweils ein vollständiger Auslesevorgang des HCCD erfolgt. Insbesondere erfolgen keine weiteren Pulsgruppen, welche Transfervorgänge auslösen.

Mit jedem Transport 42, 44, 46 und 48 werden jeweils Ladungen in das HCCD verschoben. Wenn diese Ladungen auszulesen sind, ist jeweils zuvor sicherzustellen, dass das HCCD leer ist, also keine vorangegangenen Ladungen mehr enthält. Ab dem Transport 46 werden jeweils Ladungen in das HCCD verschoben, welche aus m Teilbelichtungen akkumuliert sind.

Durch einen Puls 47 eines Signals HR (in der Figur symbolisieren Puls 47 und Signal HR jeweils eine Gruppe von Signalen bzw. Pulsen) kann nun die in das HCCD verschobene erste Zeile aus dem HCCD in bekannter Weise ausgelesen werden, beispielsweise durch sequentielles Auslesen in horizontaler Richtung. Nachfolgend kann durch Pulsgruppe 48 die zweite Bildsensorzeile in das HCCD verschoben werden und wiederum durch einen Puls 49 ausgelesen werden. In dieser Abfolge von Pulsgruppen 48, 49 können nun aufeinanderfolgend die akkumulierten Ladungen der Bildsensorzeile über das HCCD ausgelesen werden und hierdurch die gesamte Bildinformation des Objekts gewonnen werden. Der Auslesevorgang entspricht dabei dem bekannten Auslesevorgang eines Flächenbildsensors IL-CCD in der bekannten Verwendung als Flächenaufnahme eines Objekts und während dieser Transport- und Auslesevorgänge finden keine weiteren Transfers von Ladungen aus den Bildsensorelementen statt.

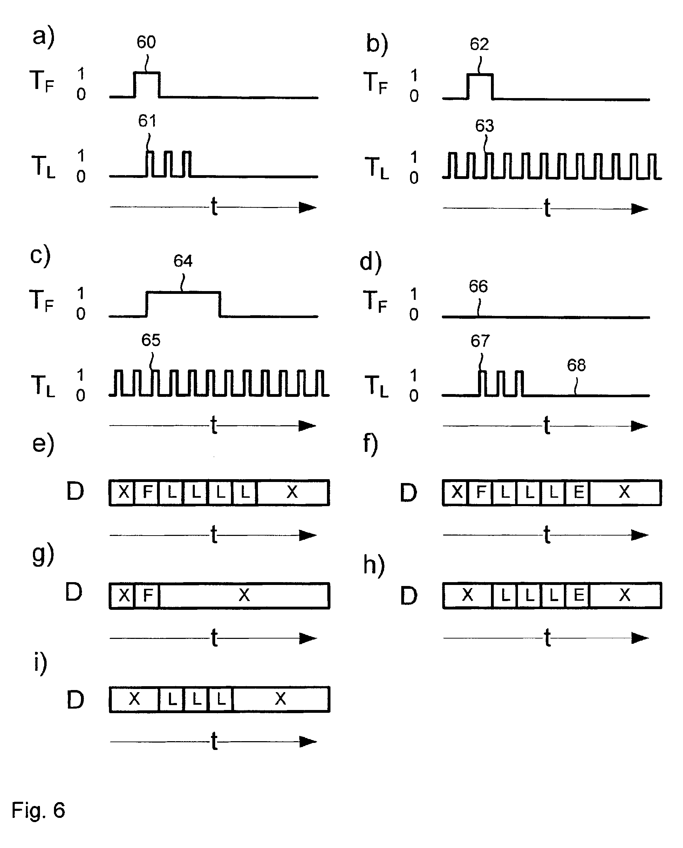

Figur 6 zeigt in den Figurenteilen a-i verschiedene alternative Möglichkeiten der Steuerung des erfindungsgemäßen flächensequentiellen-Bilderfassungsverfahrens.

Gemäß a) können zwei digitale Signale (T_{F}) und (T_{L}) vorgesehen werden, welche jeweils über Zustände (0) und (1) verfügen und die die Bildaufnahme steuern. Es kann hierbei vorgesehen werden, daß das Signal (T_{F}) mittels eines Zustandswechsels (60), z.B. von (0) nach (1), einen Bildeinzug startet und daß Pulse (61) oder Zustandswechsel des Signals (T_{L}) jeweils den Start oder das Ende einer Teilbelichtung steuert. Die Anzahl der Teilbelichtungen ist hierbei vorbestimmt und nach der letzten Teilbelichtung erfolgt ein Auslesen des Bildsensors.

Gemäß b) kann das Signal (T_{L}) auch durchgehend ein Synchronisationssignal bestehend aus Pulsen (63) oder Zustandsänderungen liefern, das jeweils einem Bildvorschub von einer Zeile entspricht. Solche Signale werden technisch häufig verwendet und können z.B. durch Drehgeber oder Lineargeber, aber auch durch einen freilaufenden Oszillator erzeugt werden. Hierbei wird durch einen Puls (62) oder einen Zustandswechsel des Signals (T_{F}) eine erfindungsgemäße Mehrfachbelichtung gestartet und es werden eine vorbestimmte Anzahl von Teilbelichtungen zu Zeitpunkten von Pulsen (63) oder Zustandswechseln des Signals (T_{L}) vorgenommen.

Gemäß c) kann auch vorgesehen sein, daß das Signal (T_{L}) ein durchgehendes Synchronisationssignal liefert und durch die Dauer eines Pulses (64) von (T_{F}) die Anzahl der Teilbelichtungen zur Laufzeit definiert. Auch in diesem Fall werden die Teilbelichtungen jeweils durch Pulse (65) oder Zustandswechsel des Signals (T_{L}) getriggert.

Auch kann gemäß d) vorgesehen sein, daß nur ein Signal (T_{L}) verwendet wird, während das erste Signal (T_{F}) unbenutzt ist, was durch einen übergangsfreien Verlauf (66) dargestellt ist. Hier triggert das Signal (T_{L}) jeweils eine Teilbelichtung. Es kann vorgesehen sein, daß nach einer vorbestimmten Zahl von Teilbelichtungen das Bild ausgelesen wird. Es kann aber auch vorgesehen sein, daß aufgrund eines zeitlichen Kriteriums (68) das Auslesen des Bildes initiiert wird. Solch ein zeitliches Kriterium kann zum Beispiel ein Time-out sein, d.h. die Überschreitung einer maximalen Pulsperiode.

Es kann aber auch ein digitaler Datenkanal D vorgesehen werden, um die Teilbelichtungen zu steuern. Dabei wird gemäß e) auf dem Datenkanal nach einem unbestimmten Zustand (X) ein Datenpaket (F) kommuniziert, welches den Einzug eines mehrfach belichteten Bildes startet. Nachfolgend werden Datenpakete (L) kommuniziert, welche jeweils eine Teilbelichtung triggern. Nach einer vorbestimmten Anzahl von Zeilen beginnt das Auslesen des Bildes und das Übertragen der Daten. Der Zustand des Datenkanals ist dabei unerheblich (X). Es kann auch vorgesehen sein, daß die Anzahl der Teilbelichtungen gemeinsam mit dem Datenpaket (F) oder mit einem der Datenpakete (L) oder dazwischen übermittelt wird.

Gemäß f) kann auch vorgesehen sein, daß ein Datenpaket (E) die letzte Teilbelichtung zur Laufzeit signalisiert.

Weiterhin kann gemäß g) vorgesehen sein, daß nur ein Datenpaket vorbestimmte Zahl von Teilbelichtungen mit vorbestimmtem Zeitlichen Abstand triggert. Die Anzahl oder der zeitliche Abstand der Teilbelichtungen kann gemeinsam mit dem Datenpaket (F) übermittelt werden.

Auch kann gemäß (h) auf das Datenpaket (F) verzichtet werden. Dann wird zu jedem Zeitpunkt (L) eine Teilbelichtung getriggert und ein Datenpaket (E) signalisiert die letzte Teilbelichtung zur Laufzeit.

Schließlich kann gemäß i) vorgesehen sein, daß nur Datenpakete (L) jeweils eine Teilbelichtung triggern. Die Anzahl der Teilbelichtungen kann hierbei vorbestimmt sein oder zur Luafzeit anhand eines zeitlichen Kriteriums, z. B. eines Time-outs ermittelt werden.

Weiterhin kann eine Speichervorrichtung, z. B. ein Register, vorgesehen werden, welches die Information über die Relativbewegung zwischen Kamera und Objekt speichert.

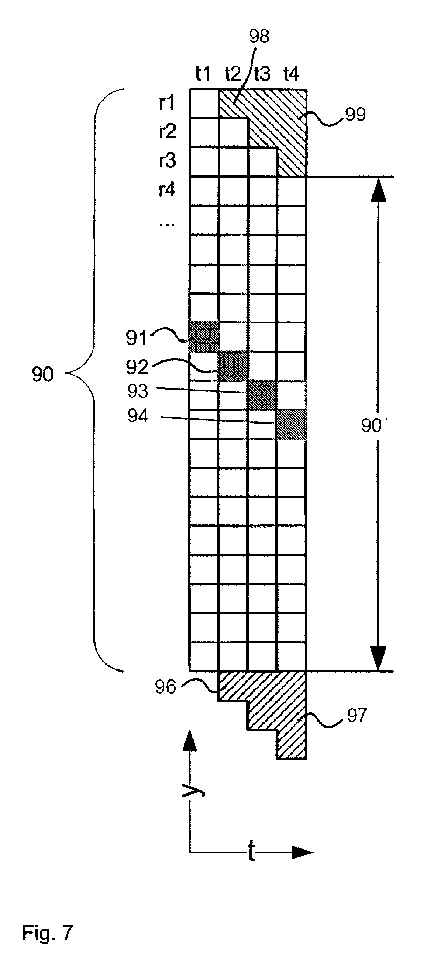

Anhand von Figur 7 werden die Effekte im Anfangs- und Endbereich des Bilderfassungsbereichs, also in den in Y-Richtung (Spaltenrichtung) gesehenen Randbereichen auftretenden Effekte erläutert.

Figur 7 stellt eine schematische Abbildung dar, bei der ein und dieselbe Spalte in vier aufeinanderfolgenden Zeitpunkten T1-T4 dargestellt ist. Die Spalte selbst weist jeweils in aufeinanderfolgenden Bildsensorzeilen angeordnete Bildsensorelemente R1, R2, R3, R4... auf.

Wie beispielhaft anhand von vier Teilbelichtungen im mittleren Bereich der Gesamtbildsensorerstreckung 90 gezeigt, kann ein Bereich einer Objektzeile in vier aufeinanderfolgenden Teilbelichtungen 91, 92, 93, 94 vierfach teilbelichtet werden und hierdurch eine Kumulierung von vier Ladungen für diesen Bereich der Objektzeile erzielt werden.

Im unteren Bereich des Bildsensors wird jedoch nach der ersten Teilbelichtung 91, welche einer entsprechenden Teilbelichtung 95 in der ersten Spalte entspricht, die entsprechend erzeugte Ladung aus der Erstreckung 90 des Bildsensorbereichs herausgeschoben, wodurch zu dieser Teilbelichtung keine weitere Teilbelichtung des Objektzeilenbereichs mehr durchgeführt werden kann. Die entsprechende Ladung kann mit einer geeigneten Vorrichtung, wie beispielsweise einem sogenannten Fast-Dump-Gate, entfernt werden oder sie kann zur weiteren Verwendung in Form eines ersten Vorsignals ausgelesen werden. Dieses erste Vorsignal ist minderbelichtet, da eine Teilbelichtung für dieses Signal addiert wurde. In entsprechender Weise werden in dem Bereich 97 unterhalb des Erstreckungsbereichs 90 des Bildsensors nur zweifach bzw. dreifach teilbelichtete Objektbereiche verschoben, die ebenfalls entsprechend minderbelichtet sind und entweder entfernt oder als Vorsignal zur Verfügung gestellt werden.

In entsprechend analoger, aber inverser Weise wird im oberen Bereich des Bildsensors zum Zeitpunkt T2 eine zweite Teilbelichtung in der obersten Bildzeile R1 im Bildsensorbereich 98, zu der keine zugeordnete erste Teilbelichtung vorliegt, so dass für den Objektzeilenbereich, der in dieser zweiten Teilbelichtung an Stelle 98 erfasst wird, eine Teilbelichtung fehlt und nur insgesamt drei Teilbelichtungen addiert werden können. In entsprechender Weise kann für den oberen Bereich 99 für weitere Objektzeilenbereiche nur eine Zweifach- bzw. Einfachbelichtung bereitgestellt werden, d.h. auch in diesem Bereich wird eine Minderbelichtung eines Teils des Objekts erzielt.

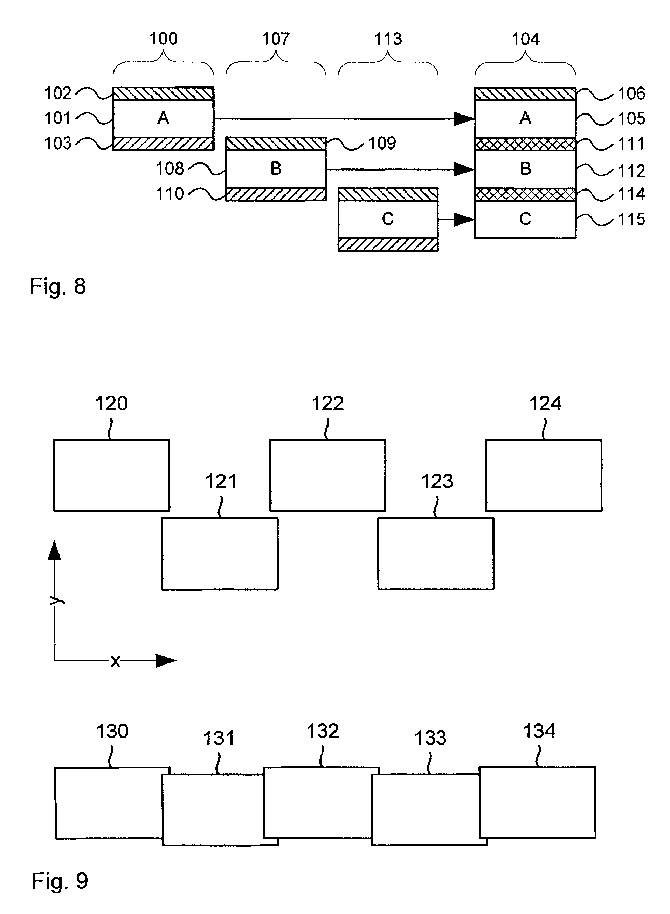

Figur 8 erläutert schematisch ein modifiziertes, erfindungsgemäßes Bilderfassungsverfahren. Bei diesem Bilderfassungsverfahren werden innerhalb von drei voneinander zeitlich beabstandeten Bilderfassungszeiträumen 100, 107, 113 drei Objektbereiche A, B und C mittels des zuvor erläuterten Bilderfassungsverfahrens erfasst.

Jeder Objektbereich A, B, C weist, wie beispielhaft anhand der Objektbereiche A, B gezeigt, einen vollbelichteten Zentralbereich 101 bzw. 108 auf und entsprechend minderbelichtet Anfangs- und Endbereiche 102, 103 bzw. 109, 110.

Die zeitlich versetzte Aufnahme der Objektbereiche A, B, C kann beispielsweise dadurch erfolgen, dass ein CCD-Bildflächensensor in mehrere Gruppen von Bildsensorzeilen unterteilt wird und mit diesen Gruppen jeweils eine einzelne Bilderfassung gestartet wird, wobei die Gruppen zu zeitlich versetzten Zeitpunkten gestartet werden. Die zeitlichen Abstände zwischen den Bilderfassungsbereichen 100, 107, 113 werden hierbei solcherart mit der Relativgeschwindigkeit zwischen Objekt und Bildsensor abgeglichen, dass sich die minderbelichteten Anfangs- und Endbereiche der aufeinanderfolgend erfassten Objektbereiche vollständig überschneiden. Hierdurch kommt der Endbereich 103 in vollständiger Überschneidung zum Anfangsbereich 109 des nachfolgenden Bilderfassungsbereichs B zu liegen und der minderbelichtete Endbereich 110 in entsprechender Weise vollständig überdeckend mit dem minderbelichteten Anfangsbereich des nachfolgenden Bildbereichs C zu liegen.

In einem nachfolgenden Bildverarbeitensschritt können nun die drei Bildbereiche A, B, C so zusammengefügt werden, dass aus den sich jeweils überschneidenden minderbelichteten Bereichen ein vollständig belichteter Bereich gebildet wird, so dass sich für das Objekt nur ein einziger minderbelichteter Anfangsbereich 106, gefolgt von vollständig belichteten Bereichen 105, 111 (gebildet aus den minderbelichteten Bereichen 103, 109) 112, 114 (wiederum gebildet aus zwei minderbelichteten Bereichen) und 115 sowie ein entsprechend minderbelichteter Endbereich ergibt.

Der minderbelichtete Anfangsbereich 106 kann hierbei weiterhin als Vorsignal verwendet werden, wie im weiteren erläutert.

Figur 9 erläutert zwei alternative Möglichkeiten der Anordnung von mehreren Bildsensoren bzw. Kameras zueinander für eine Objekterfassung mittels mehrerer Bildsensoren bzw. Kameras.

Wie in der oberen Anordnung der Figur 9 gezeigt, können solche mehreren Bildsensoren bzw. Kameras in Y-Richtung alternierend gestaffelt und in X-Richtung nebeneinander angeordnet sein, so dass eine geringfügige Überschneidung in X-Richtung um wenige Spalten oder auch nur eine Spalte ermöglicht wird und die Bildsensoren bzw. Kameras in insgesamt zwei Reihen angeordnet sind. Mit einer solchen Anordnung kann dann ein sich in X-Richtung über einen großen Bereich erstreckendes Objekt mit einer hohen Auflösung zusammenhängend erfasst werden, indem die Bildsensorbereiche bzw. Kameras in entsprechend synchronisierter Weise zusammen die Bilderfassung durchführen.

In der unteren Anordnung der Figur 9 sind mehrere Kameras gezeigt, die so zueinander ausgerichtet sind, dass ihre Objekterfassungsbereiche in einer Reihe in X-Richtung zueinander angeordnet sind und sich hierbei teilweise überlappen. Mit dieser Anordnungsweise kann wiederum eine sich in X-Richtung über einen großen Bereich erstreckendes Objekt zusammenhängen in einem Erfassungsvorgang erfasst werden, ohne dass hierzu eine alternierende Staffelung in Y-Richtung erforderlich wäre und folglich ohne dass hierzu eine entsprechende zeitliche Synchronisierung mit Versatz der Aufnahmezeiten einer Objektzeile in den entsprechenden Kameras erforderlich wäre.

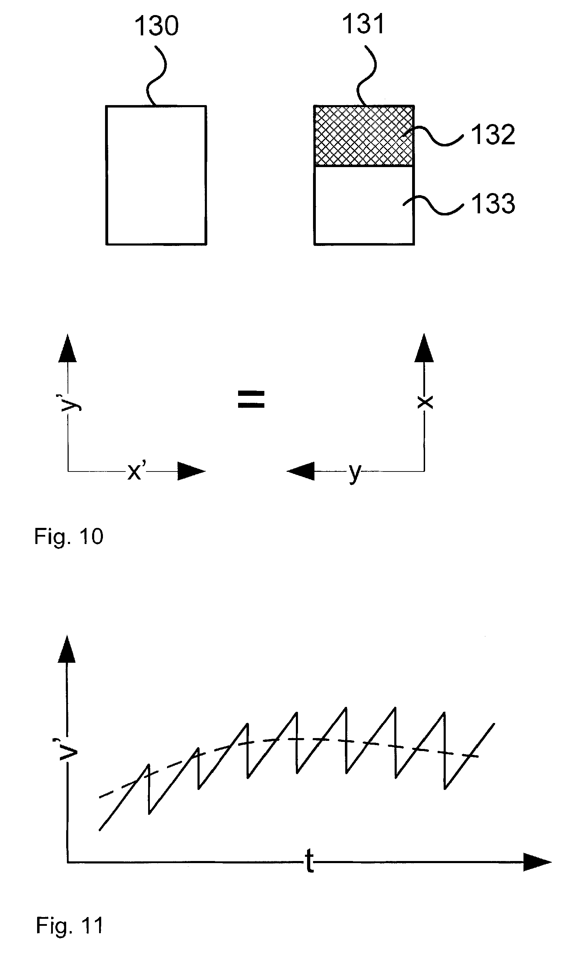

Figur 10 zeigt eine Bilderfassungskonstellation, bei der ein Objekt sich relativ in Zeilenrichtung zum Bildsensor bewegt. In einer solchen Bilderfassungssituation kann die Kamera um 90° gedreht werden, so dass die Y-Richtung des Bildsensors der X'-Relativbewegungsrichtung entspricht. Auf diese Art und Weise kann sich das in dieser Richtung bewegende Objekt nach dem erfindungsgemäßen Verfahren zeilensequentiell bilderfasst werden. Dabei kann darüber hinaus vorgesehen werden, sofern sich das Objekt in Y-Richtung weniger weit erstreckt als in X-Richtung, dass nun ein Teil 143 des Bildsensors zur Bilderfassung genutzt wird und ein Teil 142 des Bildsensors unbenutzt bleibt. Um eine Beschleunigung der Bilderfassung in einem solchen Fall zu ermöglichen kann vorgesehen werden, die nicht genutzten Bereiche des Bildsensors nicht auszulesen, da in ihnen keine relevante Bildinformation vorhanden ist

Figur 11 zeigt schematisch ein Diagramm, bei dem eine automatisierte Anpassung der zeitlichen Beabstandung der einzelnen Teilbelichtung erfolgt, um auch Objekte scharf abbilden zu können, die sich diskontinuierlich relativ zum Bildsensor bewegen oder bei denen die Relativbewegung nicht bekannt ist.

Zu diesem Zweck wird die Synchronisationsgeschwindigkeit (also die Geschwindigkeit, mit der die Transfer- und Transportvorgänge die Ladung über den Bildsensorbereich bewegen) fortlaufend variiert, wie in Figur 11 als durchgezogene Linie symbolisiert. Aus den jeweils erzeugten Bildern wird ein Schärfeparameter ermittelt und anhand von vorbestimmten Kriterien bestimmt, bei welcher Synchronisationsgeschwindigkeit der Schärfeparameter den besten Wert angenommen hat. Dieser beste Synchronisationsgeschwindigkeitswert wird als Ausgangsbasis für die nächste Synchronisationsgeschwindigkeitsvariation herangezogen. Auf diese Art und Weise wird eine fortlaufende Schärfeoptimierung und Nachführung der Synchronisationsgeschwindigkeit an die Relativgeschwindigkeit erfolgen.

Hierbei ist zu verstehen, dass in gleicher Weise andere Bildqualitätsparameter, z. B. mittlere Helligkeit, Bildschärfeparameter, Histogramm oder Übersteuerungsbereiche, Signal-Zu-Rausch-Verhältnis oder dergleichen als Kriterium für die Optimierung herangezogen werden können. Die Optimierung kann hierbei im laufenden Betrieb oder während einer Einrichtung oder einer Betriebspause erfolgen. Insbesondere ist zu verstehen, dass die Optimierung in einem Justierungsbildsensorbereich erfolgt und anhand in der in diesem Justierungsbildsensorbereich ermittelten Daten einem oder mehreren anderen Bereichen des Bildsensors die eigentlich flächensequentielle Objekterfassung in der dann erzielbaren gewünschten Qualität erfolgen kann. Dies ist insbesondere dadurch möglich, dass das erfindungsgemäße Verfahren die Verwendung von CCD-Flächenbildsensoren für zeilensequentielle Bilderfassung ermöglicht und solche CCD-Flächenbildsensoren in der Regel über eine Vielzahl von Zeilen verfügen, von denen jedoch nur einige wenige für eine qualitativ hochwertige Objekterfassung mittels des erfindungsgemäßen zeilensequentiellen Verfahrens benötigt werden.

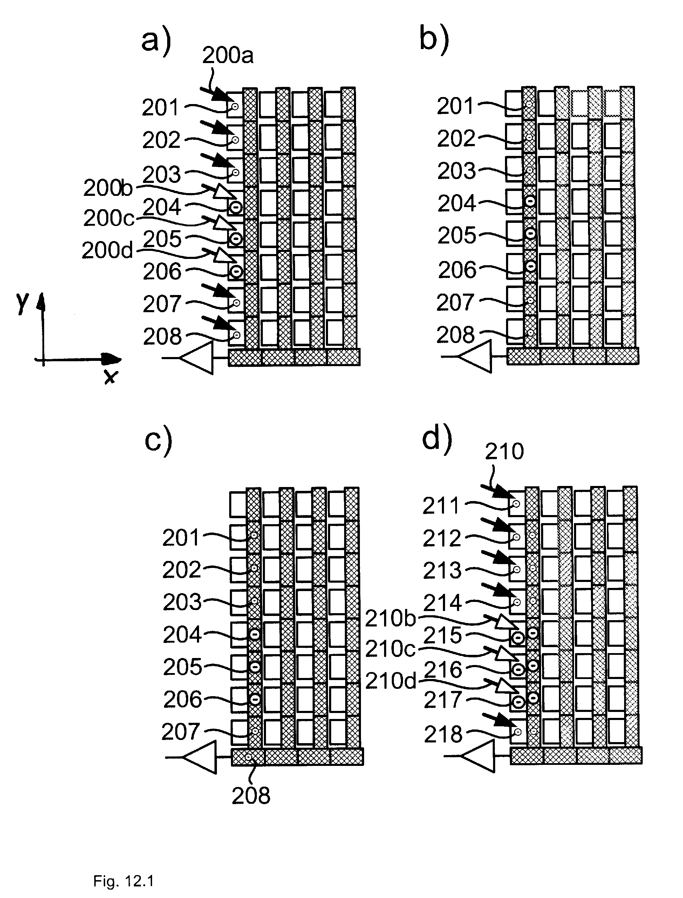

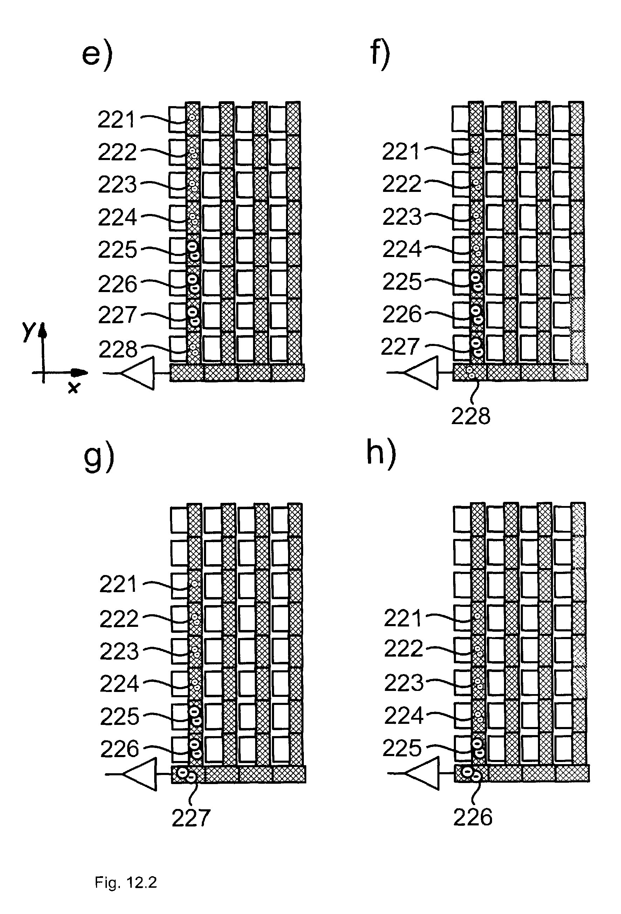

In der in den Figuren 12.1 und 12.2 dargestellten Abfolge a) bis h) ist eine flächensequentielle Bilderfassung mit Transfer- und Transportschritt symbolisch anhand eines Ausschnitts eines CCD-Bildsensors dargestellt. Wie ersichtlich, wird zunächst in einem in Figur 12.1a dargestellten Belichtungsschritt eine Belichtung aller Bildsensorelemente des Bildsensors durchgeführt, die hier zur Erleichterung der Übersichtlichkeit durch entsprechend einfallende Strahlungen 200a-d in der ersten Bildsensorspalte symbolisiert ist. Es ist zu verstehen, dass die übrigen Bildsensorelemente der abgebildeten zweiten, dritten und vierten Spalte ebenfalls in diesem ersten Belichtungsschritt belichtet werden.

Durch die Belichtung entstehen in den Bildsensorelementen elektrische Ladungen 201-208. Dabei wird das Objekt auf die Bildsensorelemente abgebildet, welche die zur Verdeutlichung größer dargestellten elektrischen Ladungen 204-206 aufnehmen, wohingegen die Bildsensorelemente mit den Ladungen 201-203, 207 und 208 den Umgebungsbereich des Objekts erfassen und somit keine für die weitere Bildauswertung relevanten Informationen aufnehmen.

In einem nachfolgenden Schritt werden die elektrischen Ladungen 201-208 in die den jeweiligen Bildsensorelementen zugeordneten Schieberegisterelemente transferiert, was zu einem Ladungszustand führt, der in Figur 12.1b abgebildet ist.

Die so transferierten Ladungen werden nachfolgend innerhalb der Schieberegisterelemente um eine Zeile nach unten verschoben, was in einer zeitgleichen berührungsfreien Transportweise erfolgt und in dem in Figur 12.1c abgebildeten Ladungszustand des CCD-Sensors resultiert.

Hierauf folgend erfolgt eine weitere Teilbelichtung der Bildsensorelemente. Aufgrund der Relativbewegung zwischen Objekt und Bildsensor wird das Objekt in dieser weiteren Teilbelichtung auf andere Bildsensorelemente abgebildet, nämlich auf die um eine Zeile versetzten Bildsensorelemente, die in Figur 12.1d die Ladungen 215-217 aufweisen.

Die so in der weiteren Teilbelichtung erzeugten elektrischen Ladungen werden nachfolgend wiederum in einem Transferschritt in die jeweils zugehörigen Schieberegisterelemente transferiert und hierbei mit den dort bereits befindlichen Ladungen aus der vorhergehenden Teilbelichtung kumuliert. Dieser Ladungszustand ist in Figur 12.2g ersichtlich. Wie man in dieser symbolischen Darstellung des Ladungszustandes nach zwei Teilbelichtungen erkennen kann, sind die Ladungen, welche aus den Belichtungen des Objekts resultieren, als Ladungen 225-227 kumuliert und durch die Synchronisierung der Transportvorgänge innerhalb des Bildsensors zu der Relativbewegung des Objekts zum Bildsensor werden Teilbelichtungen eines jeweils bestimmten Objektbereichs durch den jeweiligen Transferschritt nach einer Teilbelichtung zusammengeführt und die entsprechend entstehenden elektrischen Ladungen kumuliert.

In dem hier gezeigten Ausführungsbeispiel sei angenommen, dass die Belichtung nach insgesamt zwei Teilbelichtungen abgeschlossen ist. In diesem Fall erfolgt nach der zweiten Teilbelichtung und dem darauf folgenden Transferschritt ein Auslesen der elektrischen Ladungen aus den Schieberegistern, was durch aufeinanderfolgende Transportschritte, jeweils unterbrochen von einem vollständigen Auslesen des HCCD-Registers, das durch die in den Abbildungen 12.1, 12.2a-g unterste Zeile gebildet wird, unterbrochen ist.

Wie ersichtlich, werden zunächst in einem Transportschritt die Ladungen aus den Schieberegistern um ein Elemente nach unten transportiert, was in einer zeitgleichen, berührungsfreien Weise erfolgt. Die Ladung 228, wie ersichtlich in Figur 12.2f, wird hierdurch in ein HCCD-Element verschoben und nachfolgend im Zuge einer gesamten Auslesung der HCCD-Zeile ausgelesen. Hierauf folgend wird die aus zwei Teilbelichtungen des Objekts resultierende kumulierte Ladung 227 in das gleiche HCCD-Element verschoben und nachfolgend wiederum im Zuge einer gesamten Auslesung der HCCD-Zeile ausgelesen. Dies ist in Figur 12.2g gezeigt.

In entsprechend gleicher Weise wird in einem hierauf folgenden Transportschritt die ebenfalls aus zwei Teilbelichtungen erzeugte Ladung 226, die ebenfalls einen Objektbereich darstellt, in das gleiche HCCD-Element verschoben und nachfolgend ausgelesen.

Dieser Vorgang wird wiederholt, bis alle im Bildsensorelement erzeugten und kumulierten Ladungen auf diese Weise ausgelesen wurden. In bestimmten Anwendungsfällen kann zur Beschleunigung des Auslesevorgangs darauf verzichtet werden, das HCCD-Register auszulesen, wenn dort nur Ladungen vorhanden sind, die den Umgebungsbereich des Objekts repräsentieren (beispielsweise also die Förderbandoberfläche), so dass in den hier gezeigten Beispielen nur nach dem jeweiligen Transport der Ladungen 227, 226 und 225 ein vollständiger Auslesevorgang des HCCD-Registers erfolgen würde.

## Patentansprüche

1. Verfahren zur zeilen- oder flächensequentiellen Bilderfassung eines in einer Y-Richtung relativ zu einem Bildsensor bewegten Objekts, mit den Schritten:
a. Erfassen einer Strahlung einer sich in X-Richtung erstreckenden, ersten Objektzeile in mehreren, in X-Richtung nebeneinander angeordneten, strahlungsempfindlichen Bildsensorelementen einer ersten Bildsensorzeile in einer ersten Teilbelichtung, Umwandeln der in der ersten Teilbelichtung auf die Bildsensorelemente einfallenden Strahlung in elektrische Ladungen,
b. Transferieren der elektrischen Ladung aus jedem Bildsensorelement der ersten Bildsensorzeile in einem Transferschritt der ersten Teilbelichtung in jeweils jedem Bildsensorelement zugeordnete strahlungsunempfindliche Schieberegisterelemente der ersten Bildsensorzeile zu einem ersten Zeitpunkt t₁,
c. Transportieren von jeder elektrischen Ladung in einem Transportschritt der ersten Zeilenerfassung aus dem entsprechenden Schieberegisterelement der ersten Bildsensorzeile in jeweils ein strahlungsunempfindliches Schieberegisterelement einer in Y-Richtung beabstandeten, vorzugsweise benachbart zur ersten Bildsensorzeile liegenden, zweiten Bildsensorzeile, in der jedes strahlungsunempfindliche Schieberegisterelement wiederum einem strahlungsempfindlichen Bildsensorelement zugeordnet ist, wobei die Bildsensorelemente der zweiten Bildsensorzeile in X-Richtung nebeneinander angeordnet sind und jeweils in Y-Richtung benachbart zu den Bildsensorelementen der ersten Bildsensorzeilen liegen,
d. wobei die Y-Richtung vorzugsweise senkrecht zur X-Richtung liegt,
e. Erfassen einer Strahlung der ersten Objektzeile in den Bildsensorelementen der zweiten Bildsensorzeile, Umwandeln der von der ersten Objektzeile auf die Bildsensorelemente einfallenden Strahlung in diesen Bildsensorelementen in elektrische Ladungen,
f. Transferieren der elektrischen Ladung aus der zweiten Teilbelichtung aus jedem Bildsensorelement der zweiten Bildsensorzeile in einem Transferschritt der zweiten Teilbelichtung in die jeweils jedem Bildsensorelement zugeordneten Schieberegisterelemente der zweiten Bildsensorzeile zu einem zweiten Zeitpunkt t₂, wobei diese elektrische Ladung aus der zweiten Teilbelichtung mit der elektrischen Ladung aus der ersten Teilbelichtung aufsummiert wird,
g. wobei der zweite Zeitpunkt t₂ um ein Zeitintervall delta t zu dem ersten Zeitpunkt t₁ versetzt ist, und
h. das Zeitintervall delta t so bemessen ist, dass das Objekt sich innerhalb dieses Zeitintervalls delta t um eine solche Distanz dy relativ zu dem Bildsensor bewegt hat, dass die erste Objektzeile bei der zweiten Teilbelichtung zum Zeitpunkt t₂ auf die Bildsensorelemente der zweiten Bildsensorzeile abgebildet wird,
i. Verschieben der aufaddierten elektrischen Ladungen aus den jeweiligen Schieberegisterelementen der zweiten Sensorzeile in jeweils ein strahlungsunempfindliches Schieberegisterelement einer Auslesezeile, und
j. abschließendes Auslesen der aufaddierten elektrischen Ladungen aus den Schieberegisterelementen der Auslesezeile, um aus den Ladungen eine Bildinformation über die erste Objektzeile zu erhalten.

2. Verfahren nach Anspruch 1,
**dadurch gekennzeichnet, dass**
a. die Strahlung einer Objektzeile in einer Anzahl von m Teilbelichtungen zu entsprechend zeitlich um ein konstantes oder variables Zeitintervall delta t beabstandeten, aufeinanderfolgenden Zeitpunkten t₁, t₂, ...tₘ auf jeweils eine einer Vielzahl von m Bildsensorzeilen abgebildet wird, die jeweils in Y-Richtung zueinander beabstandet sind, und
b. die in einem jeweiligen Bildsensorelement einer Bildsensorzeile zu einem Zeitpunkt tₓ erzeugte elektrische Ladung mit den Ladungen aus den vorhergehenden Teilbelichtungen zum Zeitpunkt k₁...tₐ₋₁ addiert wird,
c. diese aufaddierte elektrische Ladung jeweils in ein Schieberegisterelement derselben Bildsensorzeile transferiert und in eine Schieberegisterelement derjenigen Bildsensorzeile transportiert wird, in welcher die Teilbelichtung der Objektzeile zum nachfolgenden Zeitpunkt tₐ₊₁ erfolgt, wobei a eine ganzzahlige Zahl zwischen 1 und m-1 ist, und
d. das abschließende Auslesen aus den Schieberegistern der Auslesezeile erfolgt, nachdem die gesamten m Teilbelichtungen erfolgt und die hieraus gebildeten Ladungen addiert sind.

3. Verfahren nach einem der vorhergehenden Ansprüche zur flächensequentiellen Bilderfassung,
**dadurch gekennzeichnet, dass**
• mehrere Objektzeilen in einer ersten Teilbelichtung zu einem ersten Zeitpunkt t₁ in Bildsensorelementen jeweils entsprechend mehrerer Bildsensorzeilen erfasst werden,
• die aus der ersten Teilbelichtung erzeugten elektrischen Ladungen zu einem Zeitpunkt t₁ in einem Transferschritt der ersten Zeilenerfassung in Schieberegisterelemente, die den Bildsensorelementen der jeweils entsprechend mehreren Bildsensorzeilen zugeordnet sind, transferiert werden,
• die elektrischen Ladungen aus jedem Schieberegisterelement der Bildsensorzeilen der ersten Teilbelichtung in einem Transportschritt der ersten Teilbelichtung in ein Schieberegisterelement einer jeweils in y-Richtung beabstandeten Bildsensorzeile transportiert wird, und
• die mehreren Objektzeilen in einer zweiten Teilbelichtung zu einem zweiten Zeitpunkt t₂ in Bildsensorelementen der jeweils in y-Richtung beabstandeten Bildsensorzeilen erfasst werden,
• wobei der zweite Zeitpunkt t₂ um ein Zeitintervall delta t zu dem ersten Zeitpunkt t₁ versetzt ist, und
• das Zeitintervall delta t so bemessen ist, dass das Objekt sich innerhalb dieses Zeitintervalls delta t um eine solche Distanz dy relativ zu dem Bildsensor bewegt hat, dass jede Objektzeile der mehreren Objektzeilen bei der zweiten Teilbelichtung zum Zeitpunkt t₂ auf die Bildsensorelemente derjenigen Bildsensorzeile abgebildet wird, in deren Schieberegisterelemente die Ladungen aus der ersten Teilbelichtung dieser Objektzeile transportiert wurden oder werden,
• die aus der zweiten Teilbelichtung erzeugte elektrische Ladung der zweiten Teilbelichtung der jeweiligen Objektzeile zu einem Zeitpunkt t₂ in einem Transferschritt der zweiten Teilbelichtung in die Schieberegisterelemente, die den Bildsensorelementen der jeweils entsprechend mehreren Bildsensorzeilen der zweiten Teilbelichtung zugeordnet sind, transferiert werden,
• die zu jeder Objektzeile der mehreren Objektzeilen in der ersten Teilbelichtung erzeugten Ladungen mit den zu dieser Objektzeile in der zweiten Teilbelichtung erzeugten Ladungen aufaddiert werden,
• gegebenfalls drei bis m weitere Teilbelichtungen der Objektzeilen zu Zeitpunkten t₃...tₘ erfolgen, wobei jeweils ein entsprechender Transfer und Transport der Ladungen aus einer der weiteren Teilbelichtungen und eine Aufaddierung der Ladungen aus einer Teilbelichtung einer Objektzeile zu den Ladungen aus vorhergehenden Teilbelichtungen der entsprechend gleichen Objektzeile erfolgt.

4. Verfahren nach einem der vorhergehenden Ansprüche zur flächensequentiellen Bilderfassung,
**dadurch gekennzeichnet, dass**
• eine erste Gruppe von m Objektzeilen mittels einer ersten Gruppe von m Bildsensorzeilen eines Bildsensors zu einem Zeitpunkt tₐ₋₁ erfasst wird,
• zumindest eine weitere Gruppe von m Objektzeilen mittels einer entsprechend zumindest einen weiteren Gruppe von m Bildsensorzeilen desselben Bildsensors oder eines anderen Bildsensors zu demselben oder einem späteren Zeitpunkt tₐ erfasst wird, wobei a eine ganzzahlige Zahl zwischen 2 und m ist,
• für jede der zumindest zwei Gruppen von Objektzeilen eine in Zeitintervallen delta t beabstandete, aufeinanderfolgende Erfassung der Objektzeilen mit entsprechendem Transfer und Transport der erzeugten elektrischen Ladungen in Schieberegisterelemente innerhalb der jeweiligen Gruppe der Bildsensoren erfolgt, und
• in einem die Objekterfassung abschließenden Schritt die elektrischen Ladungen aus den zumindest zwei Gruppen von Bildsensorzeilen des Bildsensors in eine den beiden Gruppen gemeinsame Auslesezeile des Bildsensors oder jeweils jeder Gruppe von Bildsensorzeilen zugeordnete Auslesezeilen verschoben werden und nach jeder Verschiebung von elektrischen Ladungen einer Objektzeile aus einer Gruppe von Bildsensorzeilen diese Ladungen aus der Auslesezeile ausgelesen werden.

5. Verfahren nach einem der vorhergehenden Ansprüche,
**dadurch gekennzeichnet, dass**
• jede Teilbelichtung jeder Objektzeile durch eine permanente Strahlungsaufnahme aus der Objektzeile in den Bildsensorelementen erfolgt und
• jede Teilbelichtung durch eine Transfer-Pulsgruppe beendet wird, welche einen Transfer der Ladung in ein jeweiliges, dem jeweiligen Bildsensorelement zugeordnetes Schieberegisterelement veranlasst,
• wobei zwei aufeinanderfolgende Transfer-Pulsgruppen um das Zeitintervall delta t voneinander beabstandet sind und
• zwischen diesen aufeinanderfolgenden Transfer-Pulsgruppen eine Transport-Pulsgruppe auf die Schieberegisterelemente ausgegeben wird, welche veranlasst, dass die elektrischen Ladungen aus einem Schieberegisterelement einer m-1-ten Zeile in ein Schiebregisterelement einer m-ten Zeile transportiert werden.

6. Verfahren nach einem der vorhergehenden Ansprüche,
**dadurch gekennzeichnet, dass**
• ein externes Signal eingelesen wird, welches eine Information über die relative Bewegungsgeschwindigkeit zwischen dem Bildsensor und dem Objekt enthält, und
• die Länge des Zeitintervalls delta t in Abhängigkeit von dem Wert dieses externen Signals unter Berücksichtigung des vorbestimmten Abstands zwischen zwei aufeinanderfolgend mit der gleichen Objektzeile zu belichtenden Bildsensorzeilen und dem Abbildungsstrahlengang zwischen Objekt und Bildsensor bestimmt wird.

7. Verfahren nach dem vorhergehenden Anspruch,
**dadurch gekennzeichnet, dass** als externes Signal das Signal eines Drehgebers oder Lineargebers einer Fördervorrichtung verwendet wird, welches die zu erfassenden Objekte fördert, wobei insbesondere das externe Signal ein analoges Signal ist, dessen Signalhöhe ein Maß für die Relativgeschwindigkeit ist oder ein aus aufeinanderfolgenden Pulsen bestehendes digitales Signal, dessen Pulsfolgefrequenz ein Maß für die Relativgeschwindigkeit ist, insbesondere dessen Pulsfolgefrequenz dem Kehrwert von delta t entspricht oder ein ganzzahliges Vielfaches hiervon ist.

8. Verfahren nach einem der vorhergehenden Ansprüche,
**dadurch gekennzeichnet, dass**
• die Länge des Zeitintervalls delta t über eine vorbestimmte Anzahl von aufeinanderfolgenden Teilbelichtungen oder Teilbelichtungsgruppen zwischen zwei Randwerten variiert wird,
• die Bildqualität der aus diesen Teilbelichtungen oder Teilbelichtungsgruppen erzielten Objekterfassungen anhand vorbestimmter Kriterien wie Schärfe, Signal zu Rausch-Verhältnis, Belichtungshöhe, Kontrast beurteilt wird,
• die Teilbelichtung oder Teilbelichtungsgruppe ermittelt wird, welche das beste Qualitätsergebnis erreicht hat, und
• die Länge des Zeitintervalls delta t oder die Größe der Randwerte für nachfolgende Teilbelichtungen anhand des delta t dieser Teilbelichtung oder Teilbelichtungsgruppe mit dem besten Qualitätsergebnis bestimmt wird.

9. Verfahren nach einem der vorhergehenden Ansprüche,
**dadurch gekennzeichnet, dass**
• die relative Bewegungsgeschwindigkeit und/oder -richtung zwischen Objekt und Bildsensor ermittelt wird, und
• die Anzahl der Sensorzeilen, um welche die Ladungen in einem Transportschritt zwischen zwei unmittelbar aufeinander folgenden Teilbelichtungen bewegt werden und/oder die Richtung dieses Transportschritts anhand der Bewegungsgeschwindigkeit bzw. -richtung bestimmt wird.

10. Verfahren nach einem der vorhergehenden Ansprüche,
**dadurch gekennzeichnet, dass** vor der ersten Teilbelichtung der ersten Objektzeile die Bildsensorelemente auf einen vorbestimmten Ausgangswert gesetzt werden, insbesondere mittels einer Startpulsgruppe entleert.

11. Verfahren nach einem der vorhergehenden Ansprüche,
**dadurch gekennzeichnet, dass** der Beginn der Teilbelichtung in den Bildsensorelementen einer Objektzeile mittels Pulsen eines ersten Signals und die Anzahl der Teilbelichtungen dieser Objektzeile mittels Pulsen eines zweiten Signals gesteuert werden, wobei die Pulse des zweiten Signals insbesondere einem Drehgeber oder Lineargeber entstammen, der die Relativgeschwindigkeit einer Fördervorrichtung erfasst, welches die zu erfassenden Objekte fördert.

12. Verfahren nach dem vorhergehenden Anspruch,
**dadurch gekennzeichnet, dass** die Dauer der Teilbelichtungen einer Objektzeile der Pulsdauer des ersten Signals entspricht.

13. Verfahren nach einem der vorhergehenden Ansprüche,
**dadurch gekennzeichnet, dass** die Anzahl der Teilbelichtungen einer Objektzeile durch eine zeitliche Befristung oder eine vorbestimmte Anzahl bestimmt wird.

14. Verfahren nach einem der vorhergehenden Ansprüche,
**dadurch gekennzeichnet, dass** ein digitaler Datenkanal verwendet wird, um die Anzahl und Zeitpunkte der Teilbelichtungen einer Objektzeile zu steuern, wobei
• durch ein Datenpaket eines ersten Typus eine Objektzeilenteilbelichtung gestartet wird,
• durch aufeinanderfolgende Datenpakete eines zweiten Typus jeweils aufeinanderfolgende Teilbelichtungen dieser Objektzeile gestartet werden, und
• durch ein Datenpaket eines dritten Typus, nach einer vorbestimmten Anzahl von Teilbelichtungen derselben Objektzeile oder nach einer vorbestimmten Zeitspanne die Auslesung der aus der mehrfachen Teilbelichtungen der Objektzeile resultierenden, aufaddierten elektrischen Ladungen gestartet wird.

15. Verfahren nach einem der vorhergehenden Ansprüche,
**dadurch gekennzeichnet, dass** in jeder Teilbelichtung alle Bildsensorelemente des Bildsensors belichtet werden.

16. Vorrichtung zur zeilensequentiellen Bilderfassung eines in einer Y-Richtung relativ zu einem Bildsensor bewegten Objekts, umfassend:
• einen CCD-Flächensensor mit einer Vielzahl von Bildsensorzeilen, in denen jeweils eine Vielzahl von strahlungsempfindlichen Bildsensorelementen und eine entsprechende Vielzahl von strahlungsunempfindlichen Schieberegisterelementen angeordnet sind, von denen jedes Schieberegisterelement einem Bildsensorelement zugeordnet ist und die Bildsensorelemente mehrerer Bildsensorzeilen des Bildsensors in Spalten zueinander angeordnet und die Schieberegisterelemente mehrerer Bildsensorzeilen des Bildsensors in Spalten zueinander angeordnet sind,
• wobei sich die Bildsensorzeilen in einer X-Richtung erstrecken und sich die von den Bildsensorelementen und Schieberegisterelementen gebildeten Spalten in einer Y-Richtung erstrecken, die der Relativbewegungsrichtung zwischen Bildsensor und Objekt entspricht und die vorzugsweise senkrecht zur X-Richtung liegt,
• eine Aufnahmesteuerungseinheit, welche ausgebildet ist,
- um zu einem a-1-ten Zeitpunkt den Transfer einer elektrischen Ladung aus den Bildsensorelementen einer a-1-ten Bildsensorzeile in die Schieberegisterelemente dieser Bildsensorzeile und gegebenenfalls die Addition dieser Ladung zu einer bereits in diesen Schieberegisterelementen vorhandenen Ladung zu veranlassen,
- um zu einem nachfolgenden Zeitpunkt den Transport der elektrischen Ladung aus den Schieberegisterelementen der a-1-ten Bildsensorzeile in die Schieberegisterelemente einer in y-Richtung um die Distanz dy beabstandeten m-ten Bildsensorzeile zu veranlassen
- um zu einem weiter nachfolgenden a-ten Zeitpunkt den Transfer einer elektrischen Ladung aus den Bildsensorelementen der m-ten Bildsensorzeile in die Schieberegisterelemente dieser m-ten Bildsensorzeile und die Addition dieser Ladung und einer gegebenfalls bereits in diesen Schieberegisterelementen vorhandenen Ladung zu veranlassen,
- wobei der m-te Zeitpunkt tₐ um ein Zeitintervall delta t zu dem a-1-ten Zeitpunkt tₐ₋₁ versetzt ist, und
- das Zeitintervall delta t so bemessen ist, dass das Objekt sich innerhalb dieses Zeitintervalls delta t um eine solche Distanz relativ zu dem Bildsensor bewegt hat, dass sich die Abbildung der a-1-ten Objektzeile zum Zeitpunkt tₐ um eine Distanz dy auf dem Bildsensor verschoben hat und auf die Bildsensorelemente der m-ten Bildsensorzeile abgebildet wird,
- und wobei a eine ganzzahlige Zahl zwischen 2 und m ist,
- und um die aufaddierten elektrischen Ladungen aus den jeweiligen Schieberegisterelementen nach einer Mehrzahl von Erfassungen derselben Objektzeile in jeweils ein strahlungsunempfindliches Schieberegisterelement einer Auslesezeile zu verschieben, und
- um abschließend die aufaddierten elektrischen Ladungen aus den Schieberegisterelementen der Auslesezeile auszulesen, um aus den Ladungen eine Bildinformation über die a-1-te Objektzeile zu erhalten.

17. Computerprogrammprodukt zur Ausführung auf einem Computer, **dadurch gekennzeichnet, dass** es die Schritte des Verfahrens nach einem der vorhergehenden Ansprüche 1-12 ausführt, wenn es auf einem Computer ausgeführt wird.
